# EUROPEAN PATENT SPECIFICATION

(11) **EP 3 205 086 B1**
(45) Date of publication and mention of the grant of the patent: **03.11.2021**
(21) Application number: 15753503.0
(22) Date of filing: 21.07.2015
(51) Int. Cl.: H04N 5/347, H04N 5/372, H04N 5/374, H04N 5/3745, H04N 5/378

(54) **PHOTOSENSITIVE SENSOR COMPRISING PHOTOSENSITIVE CELLS AND METHOD OF OPERATING THE SAME**
LICHTEMPFINDLICHER SENSOR MIT LICHTEMPFINDLICHEN ZELLEN UND ZUGEHÖRIGES BETRIEBSVERFAHREN
CAPTEUR PHOTOSENSIBLE COMPRENANT DES CELLULES PHOTOSENSIBLES ET SON PROCÉDÉ DE FONCTIONNEMENT

(30) Priority: 06.10.2014 NL 2013581
(43) Date of publication of application: 16.08.2017
(73) Proprietor: Semiconsultor B.v., 9407 TM Assen (NL)
(72) Inventor: TOREN, Willem-Jan, NL-9407 TM Assen (NL)
(74) Representative: Hylarides, Paul Jacques
(86) International application number: PCT/NL2015/050534
(87) International publication number: WO 2016/056893

(56) References cited:
- US-A1- 2012 097 838
- US-B1- 7 796 174
- None

## Description

The present invention relates to a photosensitive sensor comprising an array of interconnected photosensitive cells . The invention also relates to a method of operating the photosensitive sensor.

The photosensitive sensor and the method of operating the same may be especially configured to capture images of a scene moving relative to the photosensitive sensor (i.e. a scene moving with respect to the photosensitive sensor or a photosensitive sensor moving with respect to the scene). Several technologies are available to register digital images of scenes. The two most commonly used systems are charge-coupled devices (CCD sensors) and active pixel/ complementary metal-oxide semiconductor (CMOS) sensors. In charge-coupled devices, the photons received by the photosensitive cells (i.e. the pixels) of the sensor are converted into electrons (and holes) through the photo-electric effect. These charges are then transferred or "shifted" across the device, and eventually read out. In CMOS sensors, each photosensitive cell is equipped with a photo-detector which converts the received photons into an electronic signal directly.

Both systems have advantages and disadvantages. CCD sensors tend to have better image quality, and generally have a fairly good signal-to-noise ratio. CMOS sensors are, in general, cheaper to manufacture and are typically not affected by "blooming", a phenomenon wherein charge from one pixel spills over onto neighboring pixels. However, a disadvantage is that neither of these two systems is very well suited to capture images when the camera and the scene to be registered are moving relative to one another. If "shutter times" or registration times are too long, the image will be blurred; if they are too short, too little light will be registered.

One proposed solution is to operate CCD sensors in a time-delayed integration (TDI) mode. As the scene moves relative to the sensor, the scene will be "seen" by successive pixels. By collecting the charges registered by these successive pixels (in essence adding them up), the above disadvantage can be resolved to a certain extent. However, the number of additions up needs to be set in advance, and this limits the dynamic range of the sensor. Too many additions, and for bright scenes the maximum charge Qₘₐₓ will be exceeded, flattening the details of these scenes, as points with differing levels of brightness towards the top of the scale will all be registered as being maximally bright. Too few additions, and the noise will exceed the signal for darker scenes, which means the lower end of the brightness spectrum will lose detail.

Time-delayed integration, such as it is done for CCD sensors, is not possible with CMOS sensors, as readouts are destructive: charges cannot be transferred.

US 2012/097838 A1 describes an image sensor combining CCD principles with CMOS to allow TDI with a controllable number of columns.

It It is an object of the invention to provide a photosensitive sensor and a method of operating a photosensitive sensor wherein the above-identified disadvantages of the current CCD sensors and CMOS sensors are reduced.

It is a further object of the invention to provide a photosensitive sensor, a photosensitive cell and a method of operating a photosensitive sensor wherein the quality of the captured images may be increased when the scene to be imaged and the sensor are moving relative to one another. More specifically, an object would be to provide a relatively cheap sensor and method of operating the same and/or to provide images with an improved signal-to-noise ratio and/or an improved dynamic range.

The inventive method is defined by claim 1. The inventive photosensitive sensor is defined by claim 9.

According to an aspect of the invention at least one of the above objects may be achieved in a method of operating a photosensitive sensor for capturing images of a scene, the sensor an array of interconnected photosensitive cells, arranged in a number of columns and rows, each photosensitive cell comprising:
- a CCD shift register comprising a plurality of register elements, the CCD shift register being configured to convert incoming light into charge, collecting the charge and transporting the collected charge towards a CMOS readout circuit or to the register elements of an adjacent photosensitive cell;
- a CMOS readout circuit configured to read out the CCD shift register by receiving the charges transported by each of the register elements of the CCD register and to convert the charges into a voltage or current photosensitive cell signal;
the method comprising operating the CCD shift registers and CMOS readout circuits for:
- converting light and collecting charge in the shift registers of a first column of photosensitive cells during a first integration time interval;
- reading out the CCD shift registers of the first column of photosensitive cells after the first integration time interval to provide a first photosensitive cell signal based on the charges collected in the first integration time interval;
- converting light and collecting charge in the shift registers of a second column of photosensitive cells during a second integration time interval after the first integration time interval;
- transferring the charge collected at the shift registers of the second column of photosensitive cells after the second integration time interval towards the shift registers of a further column of photosensitive cells;
- converting light and collecting charge in the shift registers of the further column of photosensitive cells during a further integration time interval;
- reading out the CCD shift registers of the further column of photosensitive cells after the further integration time interval to provide a further photosensitive cell signal based on the charges collected in the second and further integration time intervals.

The resulting photosensitive cell signals current or voltage signals and may represent (part of) an image of the scene captured. The relative movement of the scene is selected to be in a direction parallel to the row direction of the array of photosensitive cells. The speed of the scene relative to the sensor is usually known *a priori.* The speed may be substantially constant and in this case the integration time intervals may be chosen to have the same length.

The transfer of charge may result in an increase of the total integration time (also referred to as the sample time times, defined as the sum of the individual integration time intervals between consecutive read outs). In case of one charge transfer the total integration time may be doubled, in case of two charge transfers the total integration time may be quadrupled, etc. (assuming the first, second and further integration time intervals are the same). Furthermore, since the two or more photosensitive cell signals may be obtained for the situations wherein the charge has been integrated during different (varying) total integration time or, on other words, since the method enables images to be captured by using multiple integration times, light conditions do not need to be adjusted for every scene and/or more light can be received by the sensor in order to provide a better sensing performance.

The above-mentioned charge read out after the first integration time interval may be the charge collected only in the first integration time interval. However, the charge may also be the charge collected in the first integration time interval and charge collected by other cells and received from these cells during one or more previous integration time intervals. The readout is destructive so that essentially no charge is left in the register element(s) after the read out has taken place.

According to an embodiment the method comprises:
- repeating the transfer of charge to photosensitive cells of one or more successive further columns of photosensitive cells during one or more successive further time intervals;
- reading out the CCD shift registers of the photosensitive cells of the last column of photosensitive cells to provide a further photosensitive cell signal based on charges collected in the second integration time interval and the one or more further time intervals.

After the first read out the transfer of charge may be done n times (wherein n=1,2,3,4,..) before the next read out of charge is performed so as to selectively vary (increase) the total integration time. This process of varying the total integration time may be repeated as well, for instance for ever increasing numbers of transfers. In a typical scheme (pattern) controlled by the controller, the first, third and seventh column of cells is read out (the second, fourth, fifth, and sixth column is not read out) and charge transfer is accomplished between the second and third column (i.e. one charge transfer) and from the fourth to the fifth, from the fifth to the sixth and from the sixth to the seventh column. However, it is clear to the skilled person that any other scheme (pattern) can be employed as well.

For instance, after having provided the second photosensitive cell signal, the method may comprise repeating a plurality of times the transfer of charge collected at a column of photosensitive cells to an adjacent column of photosensitive cells and reading out the resulting charge of CCD registers of the destination column of photosensitive cells to provide at least one further photosensitive cell signal. In this manner three or more photosensitive current or voltage cell signals may be obtained wherein the charge has been integrated during time intervals of three or more different lengths.

The resulting photosensitive cell signals may be used to improve the image quality obtained by sensor. For instance, the method may comprise averaging a first photosensitive cell signal determined after a first total integration time and a plurality of further photosensitive cell signals determined after respective further total integration times, each further integration time being longer than a preceding integration time. By taking two, three or more cell signals for every scene, each signal having a different total integration time, the signal quality may be increased, for instance the signal to noise ration of the obtained image may be increased.

According to further embodiments of the present invention the method comprises determining the occurrence of vibrations during the collecting of charge and transporting the collected charge towards the CMOS readout circuit based on a series of photosensitive cell signals actually provided by the CMOS readout circuits in the respective rows of the photosensitive cell array. The obtained cell signals may contain information from which the occurrence of vibrations of the sensor may be derived, for instance by the controller, using suitable signal processing algorithms. For instance, based on the actually provided signals, the controller (or any other similar device) may calculate a number of predicted photosensitive cell signals and compare these predicted signals with the actual signals. Based on this comparison the controller may determine the presence of distortions representative of vibrations of the sensor during the measurement (which, for instance, may cause charge to inadvertently travel from one photosensitive cell to another) and may take appropriate action, for instance by disregarding the distorted portions of the cell signals.

In a further embodiment the method comprises checking to quality of each of the determined photosensitive cell signal and removing the one or more readout results which are determined to have insufficient quality. The controller may be programmed, for instance, to remove or disregard bad pixels or similar artefacts, during the generation of the images.

Transporting the charge from a photosensitive cell to an adjacent photosensitive cell may comprise transporting the total charge collected in all register elements of the photosensitive cell to the adjacent photosensitive cell (inter pixel charge transport). Additionally or alternatively, the method may comprise transporting a charge of a register element of a photosensitive cell to one or more of the other register elements of the same photosensitive cell during an integration time interval.

In this case charge may be transferred from a register element to another register element n times for each integration time interval, wherein n is the number of register elements of the photosensitive cell. For instance, in case of four register elements (i.e. four gate structures/conductors of the CCD shift register), the method may involve four times a charge shift. The integration time interval may be ΔT may be set equal to T/n, wherein T is the integration interval of the photosensitive cell (pixel) itself. In these embodiments, depending on the position of the scene, the scene may be kept more stably within the reach of the photosensitive cell. This may provide an improved MTF performance.

The transport direction of charge substantially corresponds to the direction of relative movement of the scene and the sensor. As mentioned above, the sensor is configured to capture images of a scene, wherein the sensor and scene move relative to each other. The photosensitive sensor may be oriented so that the direction of movement is substantially parallel to the rows of the array of photosensitive cells. In this manner the movement of the scene may be followed by the cells along the row of cells. However, the direction of movement may not always be exactly parallel to the row direction of the sensor array. In order to better cope with situations wherein the direction of movement of the scene relative to the sensor is not parallel to the row direction (and extends obliquely to the row direction), another embodiment of the invention provides for the possibility to transport charge not only in the row direction (longitudinal transport), but also in the column direction (transversal transport). This enables the controller to cause the charge to "follow" the oblique movement of the scene.

Accordingly, the CCD shift register may comprise:
- first register elements (VI-V4) arranged to transport charge in longitudinal direction from a first photosensitive cell to a second photosensitive cell arranged in an adjacent column;
- second register elements (H1-H3) arranged to transport charge in transversal direction, perpendicular to the longitudinal direction, from the first photosensitive cell to a third photosensitive cell arranged in an adjacent row;
- an array of mixing gates (M1-M4) connected to one of the first register elements and one of the second register elements;
wherein the mixing gates are configured to be selectively biased.

The controller may cause a selective biasing of the mixing gates and register elements to cause longitudinal charge transport from the first register elements gates of the first photosensitive cell through mixing gates to first register elements of a photosensitive cell in an adjacent column or transversal charge transport from the second register elements of the first photosensitive cell through mixing gates to the second register elements of a photosensitive cell in an adjacent row. The mixing gates may be the mixing gates of the first photosensitive cell itself or the mixing gates of an adjacent photosensitive cell.

The controller may further be configured to selectively cause charge transport from the first register elements of the first photosensitive cell through the mixing gates to first register elements of the second photosensitive cell, charge transport from the first register elements of the first photosensitive cell through the mixing gates to first register elements of a photosensitive cell arranged in a first adjacent row, or charge transport from the first register elements of the first photosensitive cell through mixing gates and the second register elements of the first photosensitive cell to the first register elements of a photosensitive cell arranged in a second adjacent row.

In an even further embodiment of the invention the method comprises:
- determining the speed and direction of the movement of the scene relative to the photosensitive sensor from the photosensitive cell signals received from photosensitive cells of a first part of the photosensitive sensor;
- selectively biasing the mixing gates and register elements of a different, second part of the photosensitive sensor based on the determined speed and direction of the movement of the scene.

The first (simple) part of the sensor may be used to determine the speed and direction of the relative movement of the scene and sensor, while the second (more complex) part of the sensor may be used to perform the actual capturing of the images of the scene.

According to another aspect of the invention at least one of the above objects may be achieved in a photosensitive sensor for capturing images of a scene, the photosensitive sensor comprising an array of interconnected photosensitive cells, arranged in a number of columns and rows, each photosensitive cell comprising:
- a CCD shift register comprising a plurality of register elements, the CCD shift register being configured to convert incoming light into charge, collecting the charge and transporting the collected charge towards a CMOS readout circuit or to the register elements of a adjacent photosensitive cell;
- a CMOS readout circuit configured to read out the CCD shift register by receiving the charges transported by each of the register elements of the CCD register and to convert the charges into a voltage or current photosensitive cell signal;
- a controller for controlling the operation of the CCD shift registers and CMOS readout circuits of the photosensitive cells, wherein the controller is configured to cause the CCD shift register and the CMOS readout circuit to:
- convert light and collecting charge in the shift registers of a first column of photosensitive cells during a first integration time interval;
- read out the CCD shift registers of the first column of photosensitive cells after the first integration time interval to provide a first photosensitive cell signal based on the charges collected in the first integration time interval;
- convert light and collecting charge in the shift registers of a second column of photosensitive cells during a second integration time interval after the first integration time interval;
- transfer the charge collected at the shift registers of the second column of photosensitive cells after the second integration time interval towards the shift registers of a further column of photosensitive cells;
- convert light and collecting charge in the shift registers of the further column of photosensitive cells during a further integration time interval;
- read out the CCD shift registers of the further column of photosensitive cells after the further integration time interval to provide a further photosensitive cell signal based on the charges collected in the second and further integration time intervals.

In order to allow for a scene to be followed in row direction and/or column direction the sensor may comprise:
- first register elements (VI-V4) arranged to transport charge in longitudinal direction from a first photosensitive cell to a second photosensitive cell arranged in an adjacent column;
- second register elements (H1-H3) arranged to transport charge in transversal direction, perpendicular to the longitudinal direction, from the first photosensitive cell to a third photosensitive cell arranged in an adjacent row; and
- an array of mixing gates (M1-M4) connected to one of the first register elements and one of the second register elements.

By operating the mixing gates the controller may control the direction of charge transfer either to a photosensitive cell arranged in an adjacent column or a photosensitive cell in an adjacent row. This may be accomplished in that the controller is configured to selectively bias the mixing gates and register elements to cause longitudinal charge transport from the first register elements of the first photosensitive cell to the first register elements of the second photosensitive cell and/or transversal charge transport from the second register elements of the first photosensitive cell to the second register elements of a third photosensitive cell.

According to another aspect of the invention a photosensitive sensor is provided, comprising a plurality of photosensitive cells forming an array of N rows and M columns, wherein each photosensitive cell comprises at least a dielectric layer lying on a doped silicon substrate divided into at least two electrically severed sections, a plurality of electrically severed conductor layers forming register elements, each lying on the dielectric layer, wherein the conductor layers coupled to the dielectric layer are intended for forming gate structures of at least:
a CCD shift register, wherein each register element is embodied by one gate structure whose conductor layer is connected selectively to a power source, so that conductor layers of the CCD shift register can be differently and selectively biased in order to allow or not charges transfer from a register element of the register to an adjacent one;
a CMOS readout circuit, the photosensitive cell signals being read by a controller, for instance computer means, which is at least connected to the power source and to the photosensitive cell;
a transfer gate comprising:
   a drain region whose doping is opposite to that of the second section of the doped silicon substrate,
   a gate structure formed by the dielectric layer and one conductor layer connected to the power source, the biasing of the conductor layer of said gate structure allowing or not charges transfer from the CCD shift register to the CMOS readout circuit.

According to another embodiment the sections of the doped silicon substrate lie on a core substrate whose doping is of the same as the sections of the doped silicon substrate.

According to another embodiment the silicon substrate is P doped and/or the conductor layers of the gate structures of the CCD shift register, the CMOSFET circuit and the transfer gate are made of polycrystalline silicon and/or the dielectric layer is made of an insulating material such as silicon oxide.

According to another embodiment the CMOSFET circuit comprises:
- a conversion transistor whose drain region is connected to the power source, said conversion transistor comprising a gate structure formed by the dielectric layer and one of the conductor layers, the conductor layer of the gate structure being connected to the drain region of the transfer gate, the conversion transistor being intended to convert charges coming from the CCD shift register through the transfer gate into voltage or current;
- a select transistor whose drain region is adjacent to the source region of the conversion transistor, and whose source region is connected to the controller, said select transistor comprising a gate structure formed by the dielectric layer and one of the conductor layers, the conductor layer of the gate structure being connected to the power source, the source regions and the drain regions of the select and conversion transistors having opposite doping to that of the second section of the silicon substrate.

According to another embodiment the sensor comprises a reset transistor whose drain region is connected to the power source, whose source region is connected to the conductor layer of the gate structure of the conversion transistor and to the drain region of the transfer gate, said reset transistor comprising a gate structure formed by the dielectric layer and one of the conductor layers, the conductor layer of the gate structure being connected to the power source, the reset transistor being intended for biasing to a known electrical potential the gate structure of the conversion transistor.

According to another embodiment the sensor comprises at least an insulated component inserted in a trench manufactured between the sections of the doped silicone substrate, in order to electrically isolate the CMOSFET circuit from the CCD shift register.

According to another embodiment each CCD shift register of a row is shunt connected to the next one. According to another embodiment the insulated component inserted in the doped silicon substrate of each photosensitive cell electrically isolate the CMOSFET circuit and the transfer gate of photosensitive cells from each other. The insulated components of each photosensitive cell may be made of an insulating material such as silicon oxide.

According to another aspect of the invention at least one of the earlier defined objects of the invention is obtained in a method of operating a photosensitive sensor, wherein each register element of each cell is selectively biased to a positive or a negative potential in accordance with a sequence generated by a controller, preferably comprising controller (CM), connected to the power source (EG) so as to improve integration and/or transfer from one cell to the at least next one or a combination of integration and/or transfer and wherein a read out is selectively decided by the controller according to a pattern of photosensitive cells to be read out (POCTBRO) used by the controller. The read out voltage according to the pattern of photosensitive cells to be read out (POCTBRO) may then used by the controller and at least a specific algorithm to determine which ones should be used to improve modulation transfer function (MTF) and dynamic range (DR) in time-delayed integration (TDI) mode. The read outs may be executed according to several different kind of pattern of photosensitive cells to be read out (POCTBRO).

In further embodiments the selective biasing may include the following steps:
for at least one photosensitive cell of the sensor, biasing the conductor layers of the transfer gate, the select transistor and the reset transistor to 0 volts, and biasing each of the conductor layers of the CCD shift register to a known positive electric potential thanks to the power source controlled by the controller, except at least one conductor layer which is biased to a known negative electrical potential, exposing at least the photosensitive cell to incident photons during a predetermined time called integration time tᵢ in order to generate charges in the doped silicon substrate, the value of said integration time being stored in a memory region of the controller, biasing the conductor layers of at least one half of register elements of the CCD shift register of at least the photosensitive cell to a known negative electrical potential thanks to the power source controlled by the controller, in order to concentrate charges generated by the CCD shift register in the part of the doped silicone substrate below the conductor layers of the shift register which are still biased to the positive electrical potential, only a register element adjacent to a register element that was negatively biased at first step may be negatively biased in third step.

The read out of a cell may include at least the following steps:
biasing the conductor layer of the reset transistor of the photosensitive cell to a known positive electrical potential called V_{dd} thanks to the power source controlled by the controller, the potential of the of the drain region of the conversion transistor of the photosensitive cell being V_{dd},
once the potential of node A is brought to a positive potential V+, biasing the conductor layer of the reset transistor of at least the photosensitive cell to 0 volts thanks to the power source controlled by the controller,
biasing the conductor layer of the transfer gate of the photosensitive cell to V_{dd} thanks to the power source controlled by the controller, in order to allow flow of charges from the CCD shift register to the conversion transistor,
the potential of the drain region of the transfer gate and the conductor layer of the conversion transistor of the photosensitive cell being brought to V+ - ΔV because of flow of charges, biasing the rest of the conductor layers of the CCD shift register of the photosensitive cell to 0 volts, then biasing the conductor layer of the transfer gate of the photosensitive cell to 0 volts, thanks to the power source controlled by the controller,
biasing the conductor layer of the select transistor of the photosensitive cell to V_{dd} thanks to the power source controlled by the controller, in order to transfer voltage or current from the conversion transistor to the source region of the select transistor,
measuring the potential Vₒᵤₜ of the source region of the select transistor of the photosensitive cell, in order to deduce the number of charges generated by the CCD shift register of said cell.

At least two phases may be positively biased on the adjacent cell of the one on which transfer should be done, comprising the step of reversing the polarization of the upward positively biased phase and of the downward phase adjacent the second positively biased phase, and iterating said previous step until both positively biased phases are belonging to the selected position in the cell, wherein said method is preferably applied simultaneously to several rows of the photosensitive sensor.

Before the present invention is described in greater detail, it is to be understood that this invention is not limited to particular embodiments described, as such may, of course, vary. It is also to be understood that the terminology used herein is for the purpose of describing particular embodiments only, and is not intended to be limiting, since the scope of the present invention will be limited only by the appended claims.

Unless defined otherwise, all technical and scientific terms used herein have the same meaning as commonly understood by one of ordinary skill in the art to which this invention belongs. Still, certain elements are defined below for the sake of clarity and ease of reference.

Although any methods, devices and materials similar or equivalent to those described herein can also be used in the practice or testing of the present invention, representative illustrative methods and materials are now described.

It is noted that, as used herein and in the appended claims, the singular forms "a", "an", and "the" include plural referents unless the context clearly dictates otherwise. It is further noted that the claims may be drafted to exclude any optional element. As such, this statement is intended to serve as antecedent basis for use of such exclusive terminology as "solely," "only" and the like in connection with the recitation of claim elements, or use of a "negative" limitation.

Further advantages, features and details of the present invention will be elucidated on the basis of the following description of several exemplifying embodiments thereof. Reference is made in the description to the accompanying figures, in which:
Fig. 1 illustrates the multi-sampling principle underlying the invention;
Figs. 2a - 2h illustrate time-delayed integration;
Fig. 3 is a schematic representation illustrating an example of how the method may work in a small 3 by 3 pixel array;
Fig. 4 displays an abstracted exploded perspective view of a possible pixel;
Figs. 5a - 5e illustrate how the pixel operates at the hand of potential profiles;
Figs. 6a - 6d illustrate the difference between pixel-by-pixel and on-pixel transport;
Figs. 7a - 7d illustrate modulation transfer function (MTF) issues that may occur;
Figs. 8a - 8d display the same situation as Fig. 5 where the phase has been shifted by 180 degrees;
Fig. 9a displays a photosensitive cell configured to execute the method;
Fig. 9b displays the photosensitive cell diagrammatically;

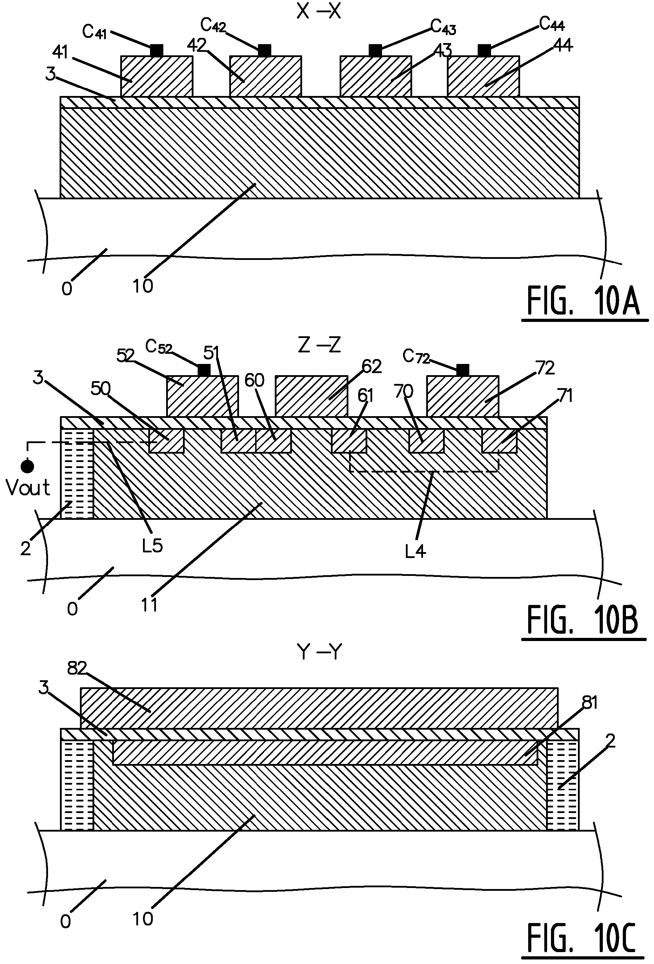

Fig. 10a, 10b and 10c display several cross-sections of the photosensitive cell;
Fig. 11 diagrammatically shows how photosensitive cells can be arranged in an array;
Fig. 12 displays a photosensitive cell configured to allow for both longitudinal as transversal transport.

Five underlying operations/techniques will be repeatedly referred to throughout this disclosure. These five operations will therefore first be explained in some detail. The technical mechanisms necessary to perform the various operations/techniques will be readily available to the person skilled in the art of CCD and CMOS sensors.

### 1. Integration

This term is used in digital imaging as the analogue for what in analog cameras would be called "exposure". During integration, photons "hit" the pixel. Due to various effects, electrons (or, to be more precise, electron-hole pairs) are generated on the pixel. Various electronic gates are biased in such a way that the holes generally move towards the substrate, while the electrons remain on the surface. However, this is merely the most common implementation. During integration, the hardware should be configured in such a way that charges will not be able to transfer to adjacent pixels. In standard operation mode, pixels will be operated in parallel, with integration occurring in a similar manner in adjacent pixels - however, this can be deviated from, as explained in more detail later.

Alternatives are possible and will be clear to the skilled person. Integration takes place both in traditional CCD as in traditional CMOS sensors.

### 2. (Longitudinal) CCD transport

CCD transport is the general term to indicate that charges - usually but not necessarily electrons -may be transported. In the transport process, charges from various areas can also be combined and/or concentrated. CCD transport is achieved by biasing gates of a "shift register" such that a potential well is shifted. As a result, charges can be transported from one pixel to a next, and even within a single pixel. The skilled person will be able to appreciate how this is done, and which gates should be biased with which voltage and in which order to the charge transport to occur.

Note that CCD transport cannot take place in CMOS sensors. It does take place both in generic CCD sensors and in CCD sensors with (longitudinal) time-delayed integration (TDI) known from the art. Transport takes place in one direction, for instance the general direction of relative movement between the scene and the camera. In the art this is sometimes referred to as vertical transport. In this disclosure, the term longitudinal transport will be used to refer to transport in this direction.

### 3. Readout

In prior art CCD sensors, the longitudinal transport continues until the end of a line of pixels, after which the charge is converted into a digital signal. The order of operations for a prior art CCD is thus: integration (1), followed by repeated longitudinal transport (2), with readout (3) happening once the charge has reached the end of the line. The process is somewhat similar for CCD sensors with TDI, with the difference that integration takes place not just once but throughout. To give a more detailed description: first, a first pixel does just integration (1). The second pixel then also does integration, as well as receiving longitudinally transported charge from the first pixel (1 + 2). The third pixel then integrates while longitudinal transport takes place from the second to the third pixel (1+2), and so on. Still, the readout procedure is similar to that for a simple CCD, in that the charge is not read out until the end of the line.

CMOS sensors on the other hand have a readout configuration at every pixel, so that charge can be converted into a digital signal without having to be transported. Thus, in CMOS sensors, every pixel performs operations 1 and 3. The skilled person will know how to achieve this, for instance by biasing a transfer gate.

The readout architecture used in embodiments of the current invention is closer to the CMOS architecture, in that charges can in principle be read out at every pixel. It is however different from CMOS architecture in that charge is not necessarily read out at every pixel.

### 4. Transverse CCD transport

Given a suitable architecture with two-dimensional shift registries, which will be disclosed later on in this document, transport can also occur in a direction perpendicular to the direction of longitudinal transport. Simple transverse transport means that objects can be followed if the relative movement changes to be across the sensor as opposed to along the sensor. Further advantages and applicable situations will be discussed further on in the disclosure.

### 5. Mix between longitudinal transport, transverse transport, and integration

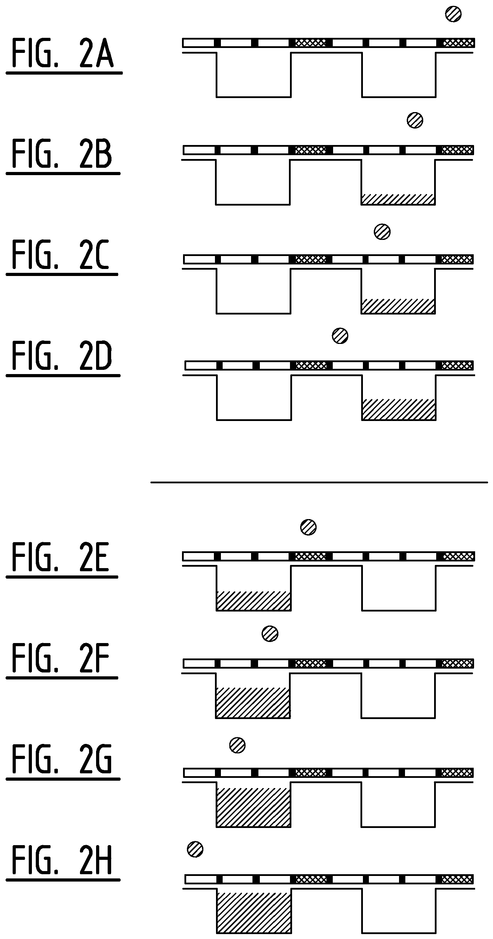

Most prior art CCD sensors with TDI employ a mix of integration and longitudinal transport. A simple example of how TDI can work is illustrated in Figures 2a-2h. As the sensor and the scene move with respect to one another, a point on a scene will first be facing a certain first pixel (Figs 2a-2d), and will later be facing a neighboring second pixel of that first pixel (Fig. 2e-2h). If the charge resulting from integration over the first pixel is transported to the second pixel, as happens between Figs. 2d and 2e, and integration over the second pixel then occurs, the cumulative charge (represented as the height of the line in the potential well) will in many cases yield a better signal. This process can be repeated over as many pixels as is desired.

The set-up depicted in Figures 2a-2h may not be optimal, since the object is not always directly above the potential well, which is static. Therefore somewhat different set-ups are often used, in which the potential well moves 'with' the object. However, the principle is the same: integration and transport are combined to obtain a more representative charge.

With transverse transport (4) as an option, this can be expanded to a mix between transport in both perpendicular directions and integration. The important element is that at each pixel, a choice must be made about whether to transport charge to the next pixel in the longitudinal direction or to the next pixel in the transverse direction. This decision will be made by computer means on the sensor itself, and the decision can be executed by correctly biasing a certain set of gates, as will be described in more detail when describing the hardware architecture later in this document.

### DESCRIPTION OF THE FIGURES.

Please note that in all cases when movement of the scene and/or the camera is described, the motion is relative, i.e. the sentence "the scene moves to the left" should be interpreted to mean "the scene moves to the left with respect to the sensor/camera" or, equivalently, "the sensor/camera moves to the right with respect to the scene. "

A "charge" here could be a plurality of electrons, but also in other circumstances a plurality of holes (or potentially other quasi-particles), which would of course affect the required bias voltages. These technical methods are well known, and will therefore not be elucidated in detail below, where the focus will be on the principle behind the proposed method. An example embodiment of a pixel which can perform the method, including gates and such, is provided later on in this document, such that the person skilled in the art can easily deduce how to manufacture a system capable of executing the method.

### EXPLANATION OF THE MULTI-SAMPLE PRINCIPLE

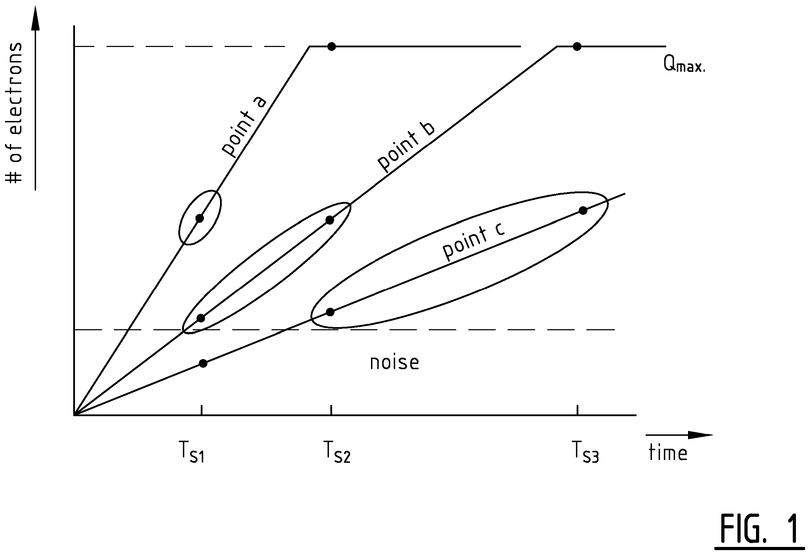

Figure 1 gives an indication of the general principle underlying an aspect of the invention, which involves the taking of multiple samples and combining them in advantageous ways. The figure depicts the charge generated as a function of time for three points (a, b, c) in a scene with various levels of brightness. Point a is very bright, point b less so, and point c is rather faint. The figure also shows a maximum charge value (Qmax) and indicates in which region the signal-to-noise ratio is too low to yield a representative signal (Noise).

The charge generated by the light emitted from point a quickly becomes large. At a first sample point Ts1, a certain time t after the start of measurement, which could for instance be commensurate with the time it takes for integration on a single pixel, or with the time the light from the point is registered by a certain pixel, it is still below the maximal value, but at a later sample points Ts2 and Ts3, Qmax has been reached. Therefore, only after a single integration time will usable, representable results be read out.

The slope for point b is less steep, and fairly good signals are registered both at Ts1 and at Ts2. Averaging over the two results may lead to an even better value. However, at Ts3, Qmax has been reached, and at this sample point no good result is achieved for point b.

For point c, on the other hand, the result at Ts1 is the worst one, since at that point the resulting charge is still in the noisy region where signal-to-noise ratio is poor. At Ts2 and Ts3, better results are obtained, and the value may be further improved by averaging over the latter two values.

Please note that the number of sampling times can be varied. For instance, if four samples are taken, a shot noise reduction of about √4 = 2, i.e. of one bit, may be achieved. In other embodiments, eight sample times could be used. Other numbers of sample times can also be used.

Note also that since readouts are destructive, the curve in effect starts over from the origin after each sample is taken. This will be explained in more detail later at the hand of Figure 2.

In a normal CCD sensor, only one measurement is made. In a simple CCD, this would have been the measurement at Ts1, and thus would only have registered a qualitatively good signal for point a and b, and not for point c. A CMOS sensor would have yielded something comparable, since it would have a similar integration time. A CCD sensor with TDI over 2 pixels, which is thus sampling at Ts2, would have yielded a good result for points b and c, but not for point a. A CCD sensor with TDI over 4 pixels, and thus sampling at Ts3, would have yielded a good result only for point c. None of these existing sensors would thus have yielded an accurate result for all three points.

However, by taking different samples after different sample times and averaging over the best results, all points could be measured, and may be registered with better quality and signal-to-noise ratio than for any of the points in existing techniques.

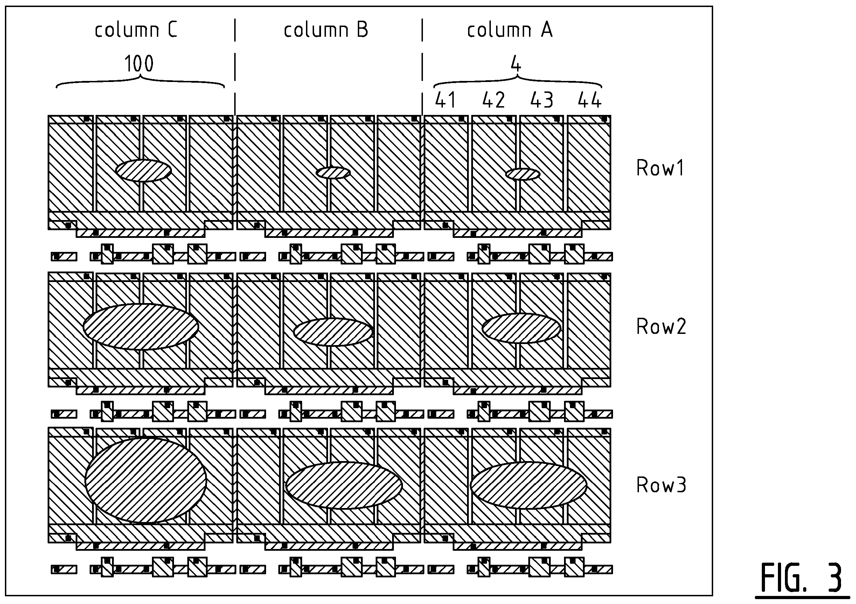

Figure 3 comprises a schematic representation of an example of the method using a sample array of three by three pixels 101. On the top-right pixel, the four different gates formed by four conductor layers (41, 42, 43, 44) of the shift register (4) have been indicated - the other 8 pixels are similarly configured.

The scene assumed to be moving from right to left with respect to the array. Hence, a line of this scene will be registered first on the rightmost column of pixels. The amount of charge is represented by the size of a dot 100 drawn on the pixel; a bigger dot means more charge was generated. While the dot is not intended to indicate the position of the charge on the pixel - the shape of the charge accumulation can be something other than a circle, and the distribution of charge may be more broad even for small amounts of charge - it is intentional that in most pixels the dot does not cover the leftmost gate of the CCD shift register: in this particular set-up, this gate is set to be blocking during integration to prevent leaks to neighboring pixels.

The image will first be registered on the rightmost column, column A. In other words: integration takes place first in column A. As can be seen by the different dot sizes, the image differs in brightness over the different rows. In reality the differences between adjacent pixels will generally not be this significant; this example is meant to be illustrative, not representative. Few photons hit the top right pixel - too few to provide a correct read out, as the signal-to-noise ratio will be too low. The pixel of column A in row 2 receives an acceptable signal, as represented by the bigger dot, thought it is still susceptible to improvement. The pixel of column A in row 3 receives a sufficient number of photons to generate a good signal immediately, as represented by the even bigger dot. The integrated charges are then read-out for each pixel in the column.

Please note that readouts are destructive. Once the charge is transformed into a digital signal during the reading out process, it is gone, and cannot be used again. Hence, after the process described above, there is no charge left on the pixels, just the three digital signals that have been produced are available: one beneath the threshold for an acceptable readout out, one around or slightly above that threshold, and one signal well above the threshold. Because of the destructiveness of the readout process, repeated measurements are necessary to get multiple readouts.

Next, the scene moves to the left with respect to the camera. This scene, or to be more precise the line on this scene that was registered earlier by the pixels in column A, is now registered by the pixels in the middle column, column B. In other words, integration takes place. As before, the photons will occasion a charge, and as can be seen, this charge is similar in size to the charge registered in column A. Again, this is due to the destructiveness of the read-out: the integration essentially starts from zero, and thus the charges in column B are roughly equal to the charges in column A. This time, however, the charge is not read out, but instead transported through the shift register to the pixels in column C. The scene (and therefore the registered line), meanwhile, will move further to the left, integration will take place in column C. As a result, the charge will effectively double. At column C, the charge is read out again. The pixel in row 1 now has a better signal, but it is still not quite good enough to yield a representative picture. The pixel in row 2 has a good signal to noise ratio, and can be read out - though the readout value will of course need to be divided by 2 to get a value comparable to what is measured after just column A. Combining and averaging the two read outs - after one and after 2 pixels - is also a possibility, and may result in decreased shot noise, and thus a better signal-to-noise ratio.

More specifically, shot noise has to do with the uncertainty that an electron will indeed be generated, and it generally goes with the square root of the number of signal electrons. The effect of this shot noise will be reduced by the square root of the number of readouts, i.e. for instance by a factor 2 after averaging over 4 readouts. The pixel in row 3 gets "overloaded", in the sense that the double charge exceeds Qmax, and does not yield a representative signal. However, row 3 already had a high-quality readout in the first column.

In conclusion: after the process described above, we have two samples/digital signals for every row, and thus 6 samples/digital signals in total. One of these (readout from the rightmost pixel in row 1) will be below the threshold for acceptability, and one (readout after integration and transport over the middle and leftmost pixel in row 3) will be larger than the maximal signal; these two signals will in most cases be discarded. From the middle row, we will get one poor and one good readout: the former can be discarded as well. This leaves us with one relatively good signal per row, and thus a high-quality registration of the scene with a good dynamic range: both the bright element registered by row 3 and the faint element registered by row 1 have yielded one good signal. Of course, especially for the faint element, improvement is still possible. A favorable embodiment will continue the process by integrating over more than 2 pixels next, yielding more digital signals and a higher change that every row will yield at least one good signal. Averaging over different results can further improve the quality of results.

This 3 by 3 array is, of course, only a very simple, illustrative example. Real arrays will contain hundreds or even thousands of rows to provide a large enough sensor. Furthermore, please note that the scene is registered by all pixels simultaneously, line by line: for instance, while the pixels in column B are integrating (registering one line of the scene), the pixels in column A are also integrating, registering the line right next to it, which will have moved to now be above it. Hence, while the process described in detail above is only for a line-picture, a full 2D picture can be obtained by the subsequent measurements.

As will be obvious to the skilled person and briefly mentioned above, the charges can also be transported over more than one pixel. An example would be a 1-2-4-8 system: the pixels are first immediately read out, then read out after transport over one pixel (which means the charges are integrated over 2 pixels), then read out after 3 transfers (4 pixels), then read out after 7 transfers (8 pixels). A system that can be even more advantageous in certain situations has 255 columns, and takes samples after 1-2-4-8-16-34-64-128 pixels. This way, even scenes that would otherwise be very noisy will achieve a sufficient signal-to-noise ratio, and bright scenes will not be flattened (i.e. different brightness values will not all be represented as white), thanks to the original readout after just 1 integration/ "exposure". Averaging between well-chosen values can improve the resulting image even further. Determining the best values to average between will differ according to the situation. Logic algorithms can be set up to choose the best option, as will be clear to the skilled person.

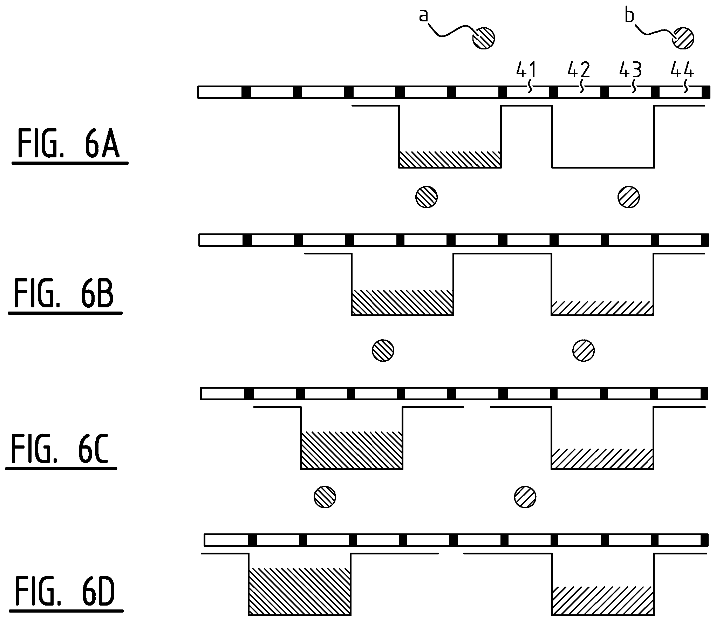

Furthermore, time-delayed integration can also, to a certain extent, be performed on a single pixel, whereby the charges are transported phase by phase as well as pixel by pixel, as is shown in figures 6a-6d. On the right, we see the situation where integration happens on a pixel with a static potential profile: the profile is the same in all four figures. As can be seen, not all possible charge is integrated, since the object will for about half the integration not be 'above' the potential well. If the potential well moves, which is achieved by opening and closing gates in turn, more charge can be integrated. This is illustrated on the left: the same object is depicted with the same motion, and from figure to figure the potential well moves to the left. If integration time over an entire pixel is T, the integration time over each position of the gates (also referred to as a phase) will be T/4. In effect, this means that transport happens 4 times as often over a distance 4 times as small, and it may yield improved results.

Thus, steps somewhat similar as the ones displayed above may also be performed on the scale of a pixel, as well as (or instead of) on the scale of a pixel array, though a limitation is imposed on this due to the fact that at any time at least some gates need to be close. A distinction can be made here between so-called static pixel TDI and dynamic pixel TDI. The former is for instance depicted in Figures 2a-2h: each pixel has an essentially static potential well, and charge is transported from one pixel to the next. In the latter, transport goes in smaller steps, not just between pixels but also on the pixel itself. Dynamic pixel TDI can be more effective at following along with a line of a scene. The skilled person will be able to determine which set-up is most advantageous in a certain situation.

Thus, with this method, a scene can be imaged even if only short exposure times are possible, and with good dynamic range. It improves on standard CCD sensors with time-delayed integration because in those systems, the number of integrations is set first, and only one sample is taken, while in the current invention, several samples are taken after varying numbers of integrations, and the best output or outputs can be flexibly chosen, with further improvements possible through selective averaging. The person skilled in the art will of course be able to envisage many variations using the underlying principle.

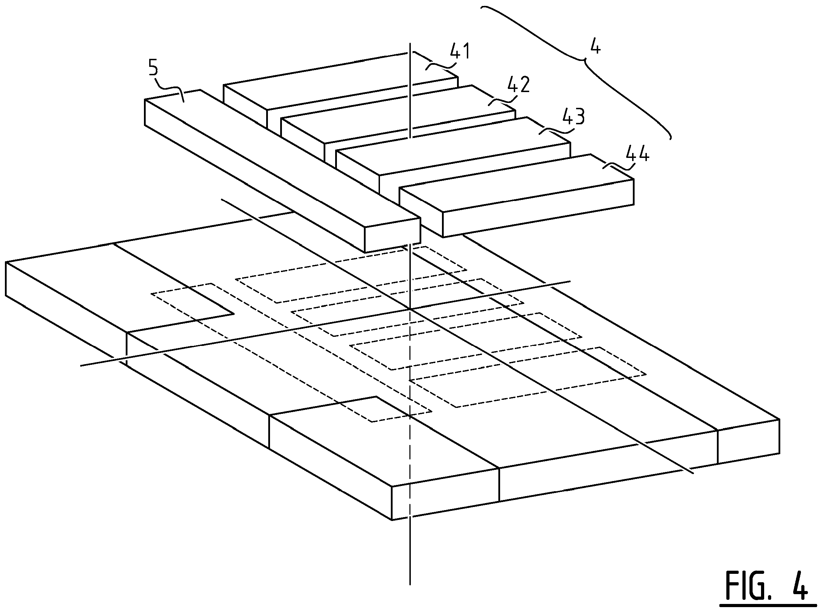

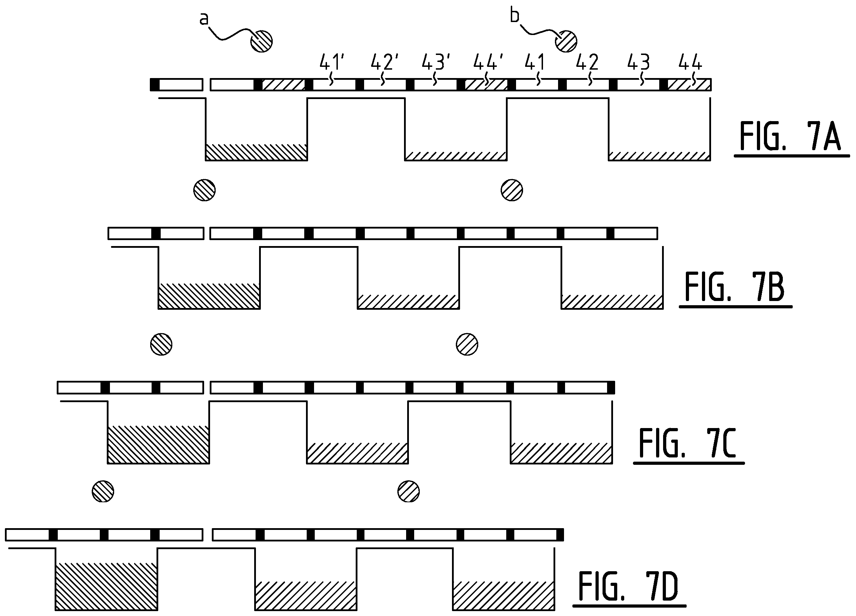

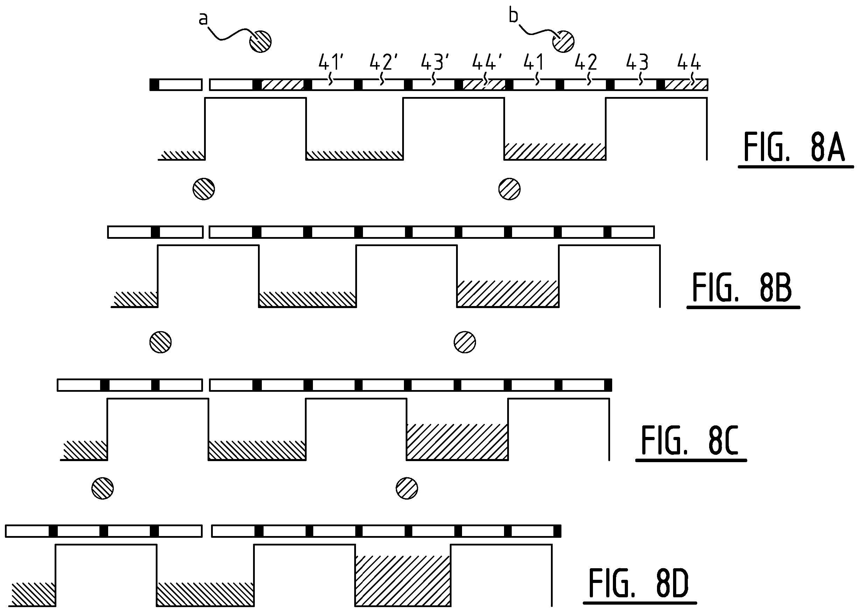

In Fig. 4, a perspective and exploded view of an abstracted possible pixel design is depicted, which will allow us to illustrate the method in some more detail later. The figure shows four register elements (herein also referred to as "gate structures" or "gates"), each register element comprising a conductor layer (41, 42, 43, 44). These register elements constitute the four gates of a shift register (4). We also see CMOS-style readout circuitry (5) placed on a substrate, as will be explained later in more detail with reference to figure 7a and figures 8a-8c.

In Fig. 4, the gates have been lifted to show the silicon layer below. Transport of charges through the shift register (4) will take place in the Y-direction, which is the direction going from the top left of the picture to the bottom right. For readout, the charges will be transported in the X-direction toward the readout circuitry (5), which is the direction going from top right to bottom left.

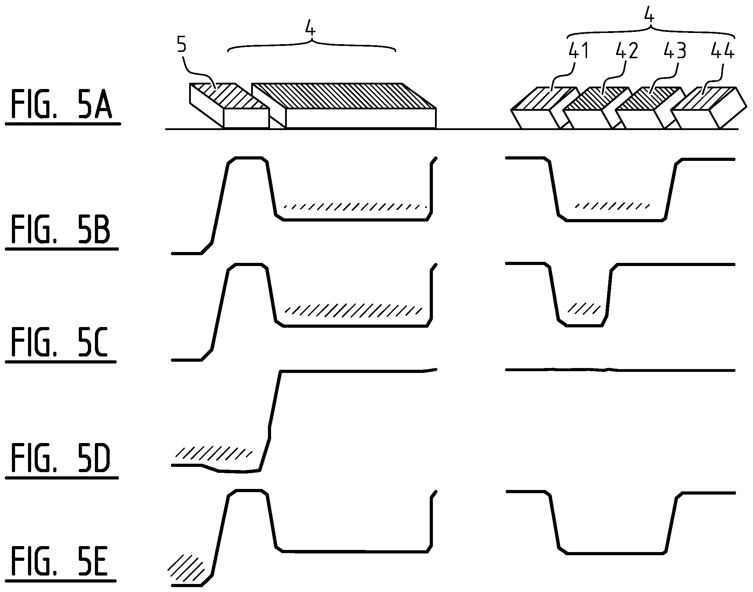

Fig. 5a shows a cross-cut of the pixel, while Figs 5b-5e show potential profiles created by the shift register (4) and the transfer gate (8) to the readout circuitry (5) as well as the charges within. In each image, the left column is a side-view from the Y-direction, while the right column shows the perspective from the X-direction. Please note that the procedure illustrated here is the procedure followed with a static potential profile, and that dynamic pixel TDI will necessitate an adapted procedure. The readout circuitry (5), is similar to the read-out circuitry one would find on a CMOS sensor (hereafter simply called "readout").

In Figs. 5a and 5b, photons have occasioned a charge in the shift register (4). As can be seen in Fig. 5b, the charges are in a potential well "on" the CCD shift register (4), which is occasioned by closing the outermost gates (41, 44) and opening the inner two gates (42, 43), as is indicated by the different hashings in the topmost graphic. The closing of the outermost gates (41, 44) also provides a potential barrier between the CCD shift register and the shift registers of neighboring pixels. At least one gate is also provided between the CCD shift register and the readout. In Fig. 5b, this gate is closed, as indicated by the right slanting hashing in in the topmost graphic and the potential barrier in the left column. The charges are therefore isolated in the middle part of the shift register.

In Fig. 5c, another gate of the CCD shift register (43) has been closed and the charges are collected in the remaining potential dip. As is indicated by the thickness of the line, the charge is more concentrated at this point. The potential barrier to the readout is still up; in other words, the gate to the readout is still closed.

In Fig. 5d, the gate to the readout is opened, and the remaining open CCD shift register gate (42) is also closed; in other words, the potential barrier to the readout (5) is lowered, and simultaneously the potential dip in the shift register is removed. Due to this, the charges will now be transferred to the readout circuitry (5).

Finally, in Fig. 5e the potential returns to how it was in the first row. The outermost gates of the CCD shift register (41, 44) are closed; the innermost gates of the CCD shift register (42, 43) are opened; and the potential barrier between the CCD shift register (4) and the readout (5) is brought back up. The charge is now fully concentrated in the readout (5) part, where it can be transformed into a digital signal, in other words: read out.

In standard operation mode for pixels which transport their charge (i.e. pixels which are not directly read out themselves), adjacent pixels will be operated in parallel. For example, if gates 41 and 44 are closed in one pixel, gates 41' and 44' will be closed in the adjacent pixel: the gates are configured to be in-phase and to be operate synchronously. However, this can be deviated from, as explained later on.

Many advantageous modifications and additions can be made using this basic principle, and will be clear to the skilled person. In particular, the use of multiple samples can be employed to remedy image capture artefacts that are regularly encountered.

One example are micro-vibrations. The method as described up until now relies on the relative motion between the camera and the scene to be in a straight line along the rows of pixels. However, in practice, this may not always be the case, and small perpendicular motions may occur, causing the integration of the scene to continue in adjacent rows, mixing up signals. A situation such as this will be illustrated in more detail at the hand of the following tables. First, in the table below, typical operation in the absence of micro-vibrations is illustrated. Please note that for this table, we have neglected any noise that may occur for reasons of clarity. The actual results will diverge from what is seen below, since the signal will in reality comprise shot noise commensurate with the square root of the number of electrons.

| Number of integrations before readout | Number representative for the size of the readout in four different, adjacent rows. | | | |
|---|---|---|---|---|
| | Row 1 | Row 2 | Row 3 | Row 4 |
| 1 | 10 | 2 | 50 | 20 |
| 2 | 20 | 4 | 100 | 40 |
| 4 | 40 | 8 | 100 | 80 |
| 8 | 80 | 16 | 100 | 100 |

What we can see from this table that in many cases the output at later sampling times can, to a certain extent, be predicted - though of course, due to noise, this will not always be as clear-cut as in the above table. In principle, if a certain charge has been registered after 1 pixel and double that charge after 2 pixels, one would expect it to be quadruple that charge after 4 pixels, as long as this is still lower than the maximal possible charge Qmax. Since Q-max is the maximal amount of charge that can be held on a pixel, no values exceeding it will be found, and from the table above we may deduce that Qmax, in these numbers, would be about 100: no higher results are registered.

In the proposed method as described before, row 1 thus produces 4 acceptable samples that can be averaged over, as does row 2. Row 3 only produces one unambiguously good signal, and row 4 produces 3 good samples.

The following table gives the results of integration the same scene as the table above, but now with a vibration just before the start of the 4 pixel integration.

| Number of integrations before readout | Number representative for the size of the readout in four different, adjacent rows. | | | |
|---|---|---|---|---|
| | Row 1 | Row 2 | Row 3 | Row 4 |
| 1 | 10 | 2 | 50 | 20 |
| 2 | 20 | 4 | 100 | 40 |
| 4 | | 40 | 8 | 100 |
| 8 | | 80 | 16 | 100 |

The two rows of the table corresponding to one integration and to two integrations are the same as above. However, the row of the table below those two rows contains some unexpected values. The 40 we would expect in the first column of readouts (the second column of the table) is found instead in the second column of readouts (the third column of the table). Likewise, other expected values are found one column more to the right than the column in which they would be expected. This can for instance be due to a micro-vibration occurring just after the second readout.

Due to the fact that in the method many samples are taken, this aberration can be detected and compensated for. Not many sample points are lost, and many of the values averaged over in the previously discussed case are still available. It is only for Row 4 that two values are missing - however, the remaining two values are sufficient to get a good result. For the three leftmost objects, no information has been lost - it simply needs to be properly gathered, taking into account the detected micro-vibrations.

Of course, micro-vibrations may occur at any point, not necessarily only just after a readout. Therefore, the exact nature of what occurred may not be as clearly visible from the results, at least to the untrained eye. However, computers can be programmed to deduce the produced micro-vibrations from the deviations from expected values, and compensate accordingly.

A further problem may occur if a certain point of an scene has stripes or other high-contrast changes between lighter and darker spots. An example would be a striped dress shirt on television, or a pedestrian crossing seen from the air. When imaging these kinds of patterns, a phenomenon can occur where the brighter areas get smudged out, leading to a loss of contrast. The capability of cameras/sensors to properly image these patterns is sometimes called the modulation transfer function (MTF) or the optical transfer function (OTF). We will employ the former nomenclature.

The problem can be more accurately illustrated at the hand of figures 7a-7d. Here, the potential profile is depicted, with an set of gates of a pixel or of several pixels above, as well as objects to be registered. As gates of the various shift registers are opened and closed, the potential profile shifts to the left. As explained earlier, similar gates on adjacent pixels are often configured to be in phase. If gate 41 on a first pixel is open, gate 41' on the adjacent pixel will be as well, and so on. In Figs. 7a-7b, object a happens to always be constantly directly over a potential well as it moves, and all the charge is thus collected in one place. Object b, on the other hand, is constantly "out-of-phase", in that it never is exactly above potential well and the charge it occasions is therefore distributed. The resulting table of signal may look for instance like:

| No. of integrations | Object a | Object b - 1^{st} readout | Object b - 2^{nd} readout |
|---|---|---|---|
| 1 | 10 | 5 | 5 |
| 2 | 20 | 10 | 10 |
| 4 | 40 | 20 | 20 |
| 8 | 80 | 40 | 40 |

Now of course, the situation can also be reversed. If the gates are 180 degrees out of sync when compared to the situation above, the result is illustrated in figures 8a-8d. Now, object b is always exactly aligned with a potential minimum, while object a is "out of sync".

| No. of integrations | Object a - 1^{st} readout | Object a - 2^{nd} readout | Object b |
|---|---|---|---|
| 1 | 5 | 5 | 10 |
| 2 | 10 | 10 | 20 |
| 4 | 20 | 20 | 40 |
| 8 | 40 | 40 | 80 |

The problem with either situation is that from the result, it is impossible to establish whether the object yielding the lower results is "out-of-phase" or whether it is a simply a wider, less bright object: both would yield the results seen in these tables.

A possible solution to this is to design an architecture in which, for instance, the first integration takes place in a certain phase, the integration over two subsequent pixels is 180 out of phase, the integration over the 4 subsequent pixels is in phase again, and so on. In effect, it combines the set-ups seen in Figs. 7a-7d and 8a-8d, though additional blocking gates between pixel sets with different phases may be necessary to make this possible.

With such a set-up, results may for example look like this:

| No. of integrations | Object a | Object? | Object b |
|---|---|---|---|
| 1 | 10 | 5 | 5 |
| 2 | 10 | 10 | 20 |
| 4 | 40 | 20 | 20 |
| 8 | 40 | 40 | 80 |

This is a very recognizable pattern: for the outermost columns, we get alternating quadrupling and identical numbers, while the middle column shows exactly the doubling pattern we would expect. The readout seen in the second column always is a registration of object a, and the readout in the fourth column will always be a registration of object b. The readout seen in the third column, due to the phase change, alternately registers object a and object b.

The above described implementations, as well as alternatives the skilled person will be able to imagine, illustrate the many advantages of taking multiple samples after varying cumulative integration times. This multi-sampling method is a way of getting a wealth of data which can then be analyzed to produce images with higher dynamic range, less interference from micro-vibrations, better MTF, etc. than those commonly produced in the art.

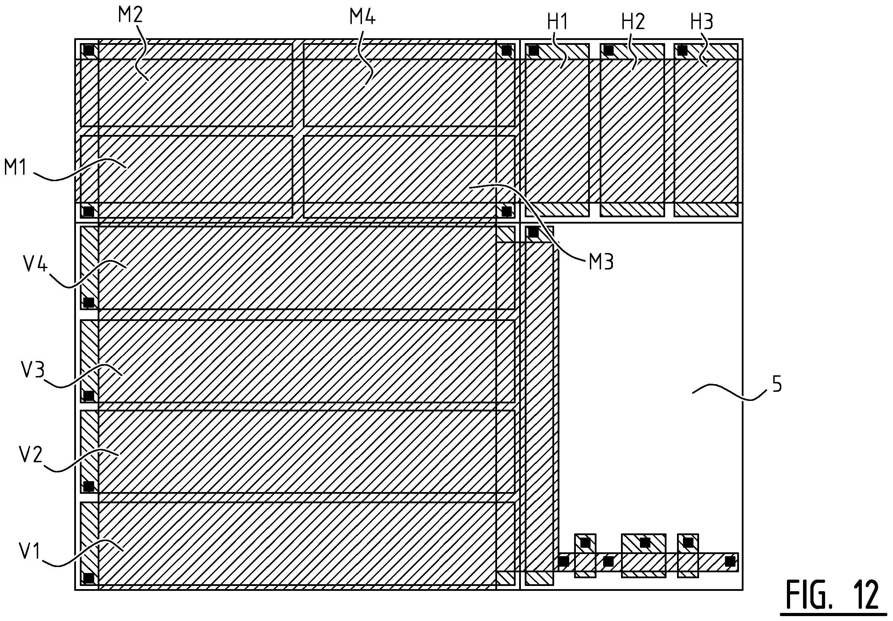

Finally, with the use of a specialized pixel architecture described in more detail later at the hand of Fig. 12, transversal as well as longitudinal transport may be employed, making it possible to apply a multi-sample method even if the relative motion of the scene and the camera is not parallel to the rows of pixels.

One possibility to establish whether transversal transport may be needed is to start a measurement with calibration. A possibility would be, for instance, to do a sequence of direct readouts over the first 8 columns. These measures will not directly yield high-quality images, as only very bright objects will be registered. However, the motion of these bright objects between columns can be tracked, and as a result, the nature of the relative motion between the camera and the scene to be imaged can be established. Making use of this calibration information, an ideal integration scheme, combining both longitudinal and transversal integration, can be calculated and executed.

For instance, in a situation where the scene and the camera have a relative motion to each other which is essentially 45 degrees from the longitudinal direction, and assuming pixels are in an embodiment essentially square, longitudinal and transversal transport could be alternated to, in essence, "follow" a point in the scene as it moves relative to the pixel array.

As will be clear to the skilled person, all variations on the method as described above can be combined as necessary. In what follows, photosensitive cells configured to execute the method are described in more technical detail.

In the following, a few example photosensitive cells/pixels are detailed that can perform the method as described above. In particular, the following section goes into more detail about the precise configuration and manufacturing of pixels such as the one schematically depicted in Fig. 3. Please note that these photosensitive cells are just a few of the possible embodiments. For instance, the number of gates can be amended, as can be the precise wiring. Many possible substitutions of elements will be apparent to the skilled person.

Please note again that charges which are moving inside the photosensitive cell from the CCD shift register to the CMOS-like readout circuit are generally understood to be electrons, but may, in other embodiments, also be positive charges like holes, since it is known that when a CCD cell or a CMOS cell is exposed to photons, photoelectric effect causes hole-electron pairs generation.

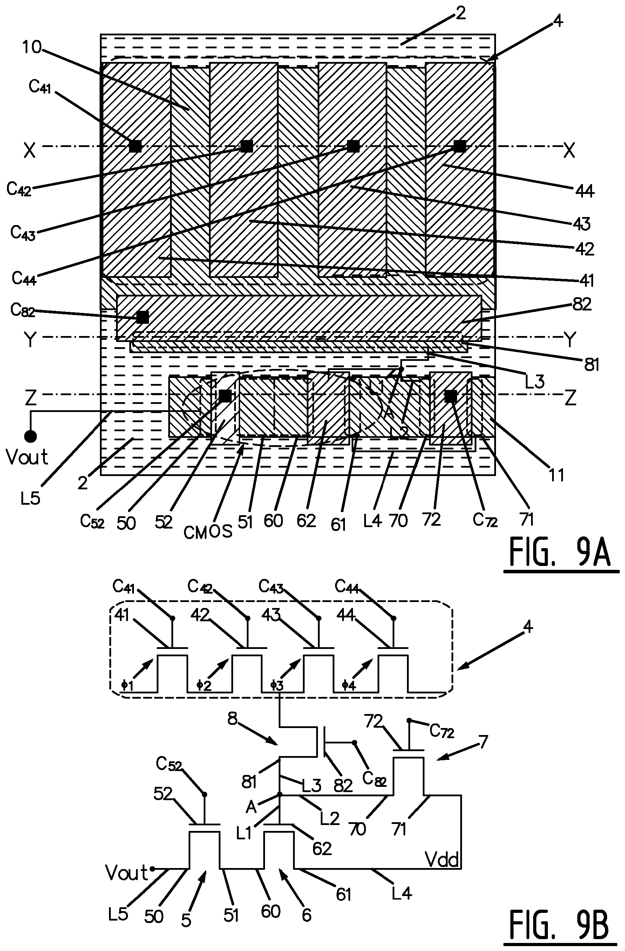

In one embodiment depicted in figure 9a (top view), 9b (diagrammatic view), and 10a through 10c (various cross-sections) the photosensitive cell is manufactured on a doped core substrate (0, fig. 2a), for example made of silicon. For example, and in a non limitative way, this core substrate (0) is P doped.

In one embodiment, the photosensitive cell comprises at least a doped silicon substrate lying on the core substrate, whose doping is opposite to that of the core substrate. For example and in a non limitative way, the doped silicon substrate is P doped. In one embodiment, the doped silicon substrate is divided into at least two electrically severed sections (10, 11), for example and in a non limitative way into two electrically severed sections (10, 11). In one embodiment, the photosensitive cell comprises a dielectric layer (3) lying on the doped silicon substrate, said dielectric layer being made of an insulated material, for example and in a non limitative way silicon oxide.

In one embodiment, the photosensitive cell comprises a plurality of conductor layers (41, 42, 43, 44, 52, 62, 72, 82;) lying on the dielectric material. For example and in a non limitative way, those conductor layers are made of polycrystalline silicon. In a preferred embodiment, the conductor layers are rectangular. Those conductor layers (41, 42, 43, 44, 52, 62, 72, 82) are electrically severed and form, in combination with the sections of the doped silicon substrate (10, 11) and the dielectric layer, several gate structures that allow charge movement inside the sections of the doped silicone substrate (10, 11) regarding the biasing of the conductor layers of said gate structures.

In one embodiment, a group of conductor layers (41, 42, 43, 44) are placed side by side on the first section (10) of the doped silicon substrate, in order to form the gate structures of a Charge-Coupled Device (4) shift register.

This CCD shift register comprises at least two phases (ϕ1...ϕn). Each phase is embodied by one gate structure whose conductor layer (41, 42, 43, 44) is connected to a power source, for example and in a non limitative way an electric generator (EG) electronically controlled by a control circuit such as computing means executing software. Since the conductor layers (41, 42, 43, 44) of the CCD shift register are individually connected to the electric generator via contacts (C41, C42, C43, C44), and since they are electrically severed, they may be differently biased, enabling charges movements inside the first section (10) of the doped silicon substrate from a phase of the CCD shift register to an adjacent one. The CCD shift register comprises at least two gates, and may comprise as many gates as is allowed by the technology. In one embodiment, the CCD shift register comprises between two and ten gates, preferentially between two and six gates. In a preferred embodiment but in a non limitative way, as in the examples illustrated until now, the CCD shift register comprises four phases (ϕ1, ϕ2, ϕ3, ϕ4), and hence four gates. This latter embodiment is the embodiment used to illustrate the method earlier, but it should be clear that the method would also work with other embodiments of a pixel with more or fewer gates.

With this embodiment of a pixel, a decision can be made at each pixel whether to transport the integrated charge further, or whether to read it out, combining the advantages and capabilities of a CCD sensor with TDI and of a CMOS sensor.

In another embodiment depicted in Fig. 12, the photosensitive cell comprises an additional shift register. The first shift register, the V-shift register, is similar to the CCD shift register in the previously described figure: it comprises here and preferably four gates (VI, V2, V3, V4), but it can also comprise fewer or more gates (VI, ..., VN). The V-shift register allows for longitudinal transport as before.

In this embodiment, the photosensitive cell also comprises a second shift register, called the H-shift register, of which the gates (HI...HN) are aligned in a direction substantially perpendicular to the direction in which the gates of the V-shift register are aligned. This H-shift register mediates transversal charge transport. In the depicted embodiment, the H-shift register comprises three gates (HI, H2, H3), but embodiments with fewer or more gates are also possible. The H-shift register makes transversal transport possible.

At the intersection on the photosensitive cell between the V-shift register and the H-shift register, multiple gates constitute what will be called the mix zone. In this mix zone, which in the depicted embodiment comprises four regions (M1, M2, M3, M4) arranged in a two by two gate array, it can be regulated whether charge passing through it will be transported longitudinally or transversally. Charge will generally arrive either after longitudinal transport through the V-shift register of the depicted photosensitive sensor, after longitudinal transport through the V-shift register of an adjacent photosensitive cell, after transversal transport through the H-shift register of the depicted photosensitive cell, or after transverse transport through the H-shift register of a neighboring photosensitive cell to the left (in the image) of the depicted photosensitive cell. In other words: charge can in principle arrive from any of the four sides.

The logic circuitry of the photosensitive cell, based on considerations such as those described earlier with respect to either lateral movement of objects or others, makes a decision about whether the charge should be transported further to the adjacent photosensitive cell in the longitudinal direction (the upwards direction in the Figure), onto the V-shift register of the photosensitive cell, transversally to the H-shift register of the adjacent photosensitive cell to the left in the figure, or transversally through the H-shift register of the photosensitive cell itself, i.e. to the right in the figure. For instance, if a bright point in the scene was, during calibration registered first by two pixels adjacent in the longitudinal direction and then by a pixel adjacent to the latter of the two pixels in the transversal direction, it may be assumed that all points on the scene move similarly, and the transport of charges can take this motion into account to "follow" the scene as it moves relative to the camera.

By the proper biasing of gates, it can be determined in the mix region whether charges will be shifted longitudinally or transversally. For instance, M1 and M2 can, together, constitute a phase that will be referred to as M12. M1 and M3 may form a phase that will be referred to as M13, etc.

Forming phases M13 and M24 will in effect expand the V-shift register to be comprised, in this particular embodiment, of a total of 6 gates, enabling longitudinal transport across the entire photosensitive cell, in which situation at least the outermost gates of the H-shift register (HI, H3) will be closed. This restores the situation described before, without any transversal transport. Associating phases M12 and M34, on the other hand, expands the H-shift register by two gates to a total of 5, permitting fully transversal transport over the entire breadth of the photosensitive cell, in which situation at least the outermost gates of the V-shift register (VI, V4) will be closed.

To change from longitudinal to transversal transport (or vice versa) on a pixel, the charge will first be collected in the mix region in one configuration (for instance M12 and M34), after which the configurations is changed (for instance to M13 and M24) and transport can continue in the perpendicular direction.

The area (5) on the pixel that is not part of the shift registers could potentially be used to house logic circuitry controlling the pixel. This may be advantageous for instance in embodiments where local adjustments are necessary. However, if the area is not used, it may be advantageous to reduce the number of gates in one of the shift registers in order to minimize the unused area. For instance, in an embodiment where area (5) is not used, the H-shift register may be smaller and/or comprises fewer gates than the V-shift register. An additional advantage of this configuration may be that in some commonly occurring circumstances, the main transport direction will be the longitudinal one, with occasional transversal "jumps". Since time-delayed integration often takes place, and timing is therefore important, it is preferable that these transversal "jumps" do not take much time when compared to the duration of longitudinal transport over the length of a photosensitive cell. However, in other embodiments, longitudinal and transversal transport may be essentially equally needed, in which case a pixel in which the V-shift register and the H-shift register comprise equal numbers of gates may be advisable.

In one embodiment, a group of conductor layers (52, 62) different from those that contribute to form the CCD shift register (4) are placed on the second section (11) of the doped silicon substrate in order to form the gate structures of a Complementary Metal-Oxide Semiconductor Field Effect Transistor (CMOSFET) circuit, said CMOSFET circuit being intended for converting electrons generated by the CCD shift register into voltage or current that may be read by computing means at least connected to the power source and to the photosensitive cell, said two conductor layers (52, 62) forming the gate structure of a conversion transistor (6) and the gate structure of a select transistor (5). The conductor layer (52) of the gate structure of the selection transistor (5) is connected to the power generator via an electrical contact (C52).

In one embodiment, computer means comprise at least a processor, data acquisition and treatment means, and at least memory means. Computer means are designed to control the power source, the photosensitive cell and more generally the photosensitive sensor of the invention. The conversion transistor (6) comprises a source region (60) and a drain region (61), the drain region (61) being connected to the power source, and is biased at an electrical potential called Vdd. The drain (60) and source (61) regions are implemented in the second section (11) of the doped silicon substrate. For example and in a non limitative way, these drain (60) and source (61) regions of the conversion transistor are strongly N-doped. The conversion transistor is intended to convert electrons coming from the CCD shift register into voltage or current, thanks to the computer means.

The select transistor (5) comprises a source region (50) and a drain region (51) implemented in the second silicon substrate (11), the drain region (51) being adjacent to the source region (60) of the conversion transistor. For example and in a non limitative way, those regions (50, 51) are strongly N- doped. The conductor layer (52) of the gate structure of the select transistor is connected to the power source, while the source region (50) of the select transistor is connected to the computer means via an electrical link (L5). Computer means may measure voltage or current coming from the select transistor, said voltage or current being relative to the number of charges collected by the CCD shift register and converted by the conversion transistor. In one embodiment, the electrical potential measured by computer means at the source region (50) of the select transistor is called Vout.

In one embodiment, the source (50) and drain (51) regions of the select transistor and the source (60) and drain (61) regions of the conversion transistor have opposite doping to that of the second section of the silicon substrate (11).

In one embodiment, the photosensitive cell comprises a transfer gate (8) connected to the power generator via an electrical contact (C82). The transfer gate (8) comprises a drain region (81) implemented in the first doped silicon substrate (10). The doping of the drain region (81) is opposite to that of the first section (10) of the doped silicon substrate. For example and in a non limitative way, this region (81) is strongly N-doped. In one embodiment, a conductor layer (82) of the photosensitive cell is intended for contributing to form the gate structure of the transfer gate (8). The conductor layer (82) of said gate structure is connected to the power source. The biasing of the conductor layer (82) of the gate structure, controlled by computer means, allows or not the flow of electrons from the CCD shift register to the CMOSFET circuit.

In one embodiment, the photosensitive cell comprises a reset transistor (7). The reset transistor comprises a source region (70) and a drain region (71) implemented in the second section of the silicon substrate (11), said regions having opposite doping to that of the silicon substrate (11). For example and in a non limitative way, those regions (70, 71) are strongly N-doped. The drain region (71) of the reset transistor (7) is connected to the power source, while the source region (70) of said transistor (7), the drain region (81) of the transfer gate (8) and the conductor layer of the gate structure of the conversion transistor are shunt connected (A) thanks to electrical links (LI, L2, L3). The drain region (71) of the reset transistor (7) is also connected to the drain region
(61) of the conversion transistor (6) via an electrical link (L4). In addition, the conductor layer (62) of the gate structure of the conversion transistor (6) is connected to the drain region (81) of the transfer gate (8).

In one embodiment, a conductor layer (72) of the photosensitive cell is intended for contributing to form the gate structure of the reset transistor. The conductor layer (72) of said gate structure is connected to the power source via an electrical contact (C72). The biasing of the conductor layer (72) of the reset transistor, controlled by computer means, allows the flow of electrons from the drain region (81) of the transfer gate (8) to the power source and from the gate structure of the conversion transistor (6) to the power source, inducing the biasing of the conductor layer (62) of the gate structure of the conversion transistor and the biasing of the drain region (81) of the transfer gate to the known electrical potential Vdd.

In one embodiment, each conductor layer (41, 42, 43, 44, 52, 62, 72, 82) of the photosensitive cell is definitely assigned either to the CCD shift register or the CMOSFET circuit or the transfer gate or the reset transistor. For example, if a conductor layer is used to form the gate structure of the transfer gate, it cannot be used to form the gate structure of the CMOSFET circuit or of a phase of the CCD phase register or of the reset transistor.

In one embodiment, every source and/or drain regions comprised in the select transistor, the conversion transistor, the reset transistor and the transfer gate are implemented in the doped silicon substrate (10, 11) at the same time during manufacture of the photosensitive cell.

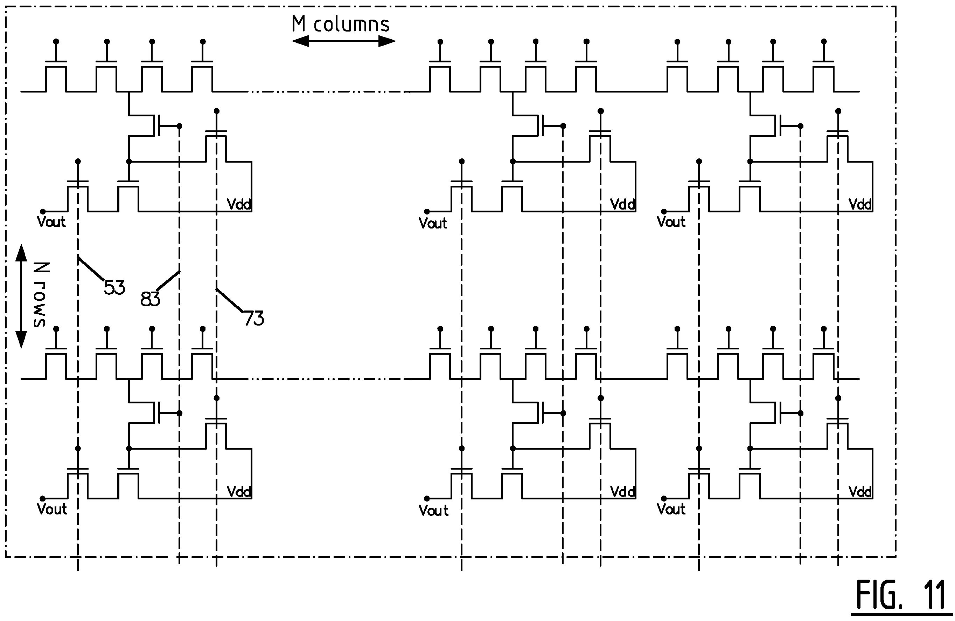

Figure 11 depicts diagrammatically an array of photosensitive cells according to one of the embodiments. In this figure, the connections which allow transport from pixel to pixel can be seen. This diagram is typical for the invention, as it allows both for (longitudinal) transport as well as comprising a read-out, CMOS-like structure for every pixel.

Please note that while this figure illustrates an array composed of pixels with a single shift register, the pixels as depicted in Fig. 12 and described above may also be arranged in an array of this type.

It is to be understood that this invention is not limited to particular aspects described. It is also to be understood that the terminology used herein is for the purpose of describing particular aspects only, and is not intended to be limiting, since the scope of the present invention will be limited only by the appended claims.

## Claims

1. Method of operating a photosensitive sensor for capturing images of a scene, the sensor comprising an array of interconnected photosensitive cells, arranged in a number of columns (A, B, C) and rows, each photosensitive cell comprising:
- a CCD shift register (4) comprising a plurality of register elements, the CCD shift register being configured to convert incoming light into charge, collecting the charge and transporting the collected charge towards a CMOS readout circuit (5) or to the register elements of an adjacent photosensitive cell;
- a CMOS readout circuit (5) configured to read out the CCD shift register (4) by receiving the charges transported by each of the register elements of the CCD register (4) and to convert the charges into a voltage or current photosensitive cell signal;
the method comprising operating the CCD shift registers and CMOS readout circuits for:
- converting light and collecting charge in the shift registers of a first column (A) of photosensitive cells during a first integration time interval;
- reading out the CCD shift registers of the first column (A) of photosensitive cells after the first integration time interval to provide a first photosensitive cell signal based on the charges collected in the first integration time interval;
- converting light and collecting charge in the shift registers of a second column (B) of photosensitive cells during a second integration time interval after the first integration time interval;
- transferring the charge collected at the shift registers of the second column (B) of photosensitive cells after the second integration time interval towards the shift registers of a further column (C) of photosensitive cells;
- converting light and collecting charge in the shift registers of the further column (C) of photosensitive cells during a further integration time interval;
- reading out the CCD shift registers of the further column (C) of photosensitive cells after the further integration time interval to provide a further photosensitive cell signal based on the charges collected in the second and further integration time intervals.

2. Method of claim 1, comprising:
- repeating the transfer of charge to photosensitive cells of one or more successive further columns of photosensitive cells during one or more successive further time intervals;
- reading out the CCD shift registers (4) of the photosensitive cells of the last column of photosensitive cells to provide a further photosensitive cell signal based on charges collected in the second integration time interval and the one or more further time intervals; and/or the method comprising, after having provided the second photosensitive cell signal:
- repeating a plurality of times the transfer of charge collected at a column of photosensitive cells to an adjacent column of photosensitive cells;
- reading out the resulting charge of CCD registers of the destination column of photosensitive cells to provide at least one further photosensitive cell signal.

3. Method according to any of the preceding claims, comprising averaging a first photosensitive cell signal determined after a first total integration time and a plurality of further photosensitive cell signals determined after respective further total integration times, each further integration time preferably being longer than a preceding integration time.

4. Method according to any of the preceding claims, comprising determining the occurrence of vibrations during the collecting of charge and transporting the collected charge towards the CMOS readout circuit based on a series of photosensitive cell signals actually provided by the CMOS readout circuits in the respective rows of the photosensitive cell array.

5. Method according to any of the preceding claims, comprising:
- checking the quality of each of the determined photosensitive cell signal;
- removing the one or more readout results which are determined to have insufficient quality.

6. Method according to any of the preceding claims, wherein transporting the charge from a photosensitive cell to an adjacent photosensitive cell comprises transporting the total charge collected in all register elements of the photosensitive cell to the adjacent photosensitive cell; and/or comprising transporting a charge of a register element of a photosensitive cell to one or more of the other register elements of the same photosensitive cell during an integration time interval, comprising transferring charge from a register element to another register element n times for each integration time interval, wherein n is the number of register elements of the photosensitive cell.

7. Method according to any of the preceding claims, wherein the transport direction of charge corresponds to the direction of relative movement of the scene and the sensor.

8. Method according to any of the preceding claims, wherein the CCD shift register (4) comprises:
first register elements (V1-V4) arranged to transport charge in longitudinal direction from a first photosensitive cell to a second photosensitive cell arranged in an adjacent column;
second register elements (H1-H3) arranged to transport charge in transversal direction, perpendicular to the longitudinal direction, from the first photosensitive cell to a photosensitive cell arranged in an adjacent row;
- an array of mixing gates (M1-M4) connected to one of the first register elements and one of the second register elements;
wherein the mixing gates are configured to be selectively biased;
the method comprising selectively biasing the mixing gates to transport charge through the mixing gates selectively in either the longitudinal direction or the transversal direction, further comprising biasing the mixing gates and register elements to selectively cause longitudinal charge transport from the first register elements gates of the first photosensitive cell through mixing gates to first register elements of a photosensitive cell in an adjacent column or transversal charge transport from the second register elements of the first photosensitive cell through mixing gates to the second register elements of a photosensitive cell in an adjacent row and/or comprising biasing the mixing gates and register elements to selectively cause charge transport from the first register elements of the first photosensitive cell through the mixing gates to first register elements of the second photosensitive cell, charge transport from the first register elements of the first photosensitive cell through the mixing gates to first register elements of a photosensitive cell arranged in a first adjacent row, or charge transport from the first register elements of the first photosensitive cell through mixing gates and the second register elements of the first photosensitive cell to the first register elements of a photosensitive cell arranged in a second adjacent row, comprising selectively biasing the mixing gates and register elements to allow the charge originated from the light of a scene to follow the movement of the scene relative to the photosensitive sensor and/or comprising:
- determining the speed and direction of the movement of the scene relative to the photosensitive sensor from the photosensitive cell signals received from photosensitive cells of a first part of the photosensitive sensor;
- selectively biasing the mixing gates and register elements of a different, second part of the photosensitive sensor based on the determined speed and direction of the movement of the scene.

9. Photosensitive sensor for capturing images of a scene, the photosensitive sensor comprising an array of interconnected photosensitive cells, arranged in a number of columns and rows, each photosensitive cell comprising:
- a CCD shift register (4) comprising a plurality of register elements, the CCD shift register being (4) configured to convert incoming light into charge, collecting the charge and transporting the collected charge towards a CMOS readout circuit (5) or to the register elements of a adjacent photosensitive cell;
- a CMOS readout circuit (5) configured to read out the CCD shift register (4) by receiving the charges transported by each of the register elements of the CCD register (4) and to convert the charges into a voltage or current photosensitive cell signal;
- a controller for controlling the operation of the CCD shift registers (4) and CMOS readout circuits (5) of the photosensitive cells, wherein the controller is configured to cause the CCD shift register and the CMOS readout circuit to:
- convert light and collecting charge in the shift registers of a first column (A) of photosensitive cells during a first integration time interval;
- read out the CCD shift registers of the first column (A) of photosensitive cells after the first integration time interval to provide a first photosensitive cell signal based on the charges collected in the first integration time interval;
- convert light and collecting charge in the shift registers of a second column (B) of photosensitive cells during a second integration time interval after the first integration time interval;
- transfer the charge collected at the shift registers of the second column (B) of photosensitive cells after the second integration time interval towards the shift registers of a further column (C) of photosensitive cells;
- convert light and collecting charge in the shift registers of the further column (C) of photosensitive cells during a further integration time interval;
- read out the CCD shift registers of the further column (C) of photosensitive cells after the further integration time interval to provide a further photosensitive cell signal based on the charges collected in the second and further integration time intervals.

10. Photosensitive sensor as claimed in claim 9, comprising:
- first register elements (V1-V4) arranged to transport charge in longitudinal direction from a first photosensitive cell to a second photosensitive cell arranged in an adjacent column;
- second register elements (H1-H3) arranged to transport charge in transversal direction, perpendicular to the longitudinal direction, from the first photosensitive cell to a third photosensitive cell arranged in an adjacent row; and
- an array of mixing gates (M1-M4) connected to one of the first register elements and one of the second register elements, wherein the controller is configured to
- selectively bias the mixing gates and register elements to selectively cause longitudinal charge transport from the first register elements gates of the first photosensitive cell through mixing gates to first register elements of a photosensitive cell in an adjacent column or transversal charge transport from the second register elements of the first photosensitive cell through mixing gates to the second register elements of a photosensitive cell in an adjacent row; and/or
- selectively bias the mixing gates and register elements to selectively cause charge transport from the first register elements of the first photosensitive cell through the mixing gates to first register elements of the second photosensitive cell, charge transport from the first register elements of the first photosensitive cell through the mixing gates to first register elements of a photosensitive cell arranged in a first adjacent row, or charge transport from the first register elements of the first photosensitive cell through mixing gates and the second register elements of the first photosensitive cell to the first register elements of a photosensitive cell arranged in a second adjacent row; and/or
- carry out the method as claimed in any of claims 1-9.

11. The photosensitive sensor of claim 9 or 10, comprising a plurality of photosensitive cells forming an array of N rows and M columns, wherein each photosensitive cell comprises at least a dielectric layer (3) lying on a doped silicon substrate divided into at least two electrically severed sections (10, 11), a plurality of electrically severed conductor layers (41, 42, 43, 44, 52, 62, 72, 82) forming register elements, each lying on the dielectric layer, wherein the conductor layers coupled to the dielectric layer are intended for forming gate structures of at least:
a CCD shift register (4), wherein each register element is embodied by one gate structure whose conductor layer (41, 42, 43, 44) is connected selectively to a power source, so that conductor layers of the CCD shift register can be differently and selectively biased in order to allow or not charges transfer from a register element of the register to an adjacent one;
a CMOS readout circuit (5), the photosensitive cell signals being read by a controller, for instance computer means, which is at least connected to the power source and to the photosensitive cell;
a transfer gate (8) comprising:
a drain region (81) whose doping is opposite to that of the second section of the doped silicon substrate (11),
a gate structure formed by the dielectric layer and one conductor layer (82) connected to the power source, the biasing of the conductor layer of said gate structure allowing or not charges transfer from the CCD shift register to the CMOS readout circuit, wherein:
- the sections of the doped silicon substrate (10, 11) lie on a core substrate (0) whose doping is of the same as the sections of the doped silicon substrate (10, 11);
- the CCD shift register comprises between two and ten register elements, preferentially between 2 and 6 register elements;
- the silicon substrate is P doped and/or wherein the conductor layers (41, 42, 43, 44, 52, 62, 72, 82) of the gate structures of the CCD shift register, a CMOSFET circuit and the transfer gate are made of polycrystalline silicon and/or wherein the dielectric layer (3) is made of an insulating material such as silicon oxide; and/or
- the sensor includes a CMOSFET circuit comprising:
- a conversion transistor (6) whose drain region (61) is connected to the power source, said conversion transistor comprising a gate structure formed by the dielectric layer (3) and one (62) of the conductor layers, the conductor layer (62) of the gate structure being connected to the drain region (81) of the transfer gate, the conversion transistor being intended to convert charges coming from the CCD shift register through the transfer gate into voltage or current;
- a select transistor (5) whose drain region (51) is adjacent to the source region (60) of the conversion transistor, and whose source region (50) is connected to the controller, said select transistor comprising a gate structure formed by the dielectric layer and one of the conductor layers, the conductor layer (52) of the gate structure being connected to the power source, the source regions (50, 60) and the drain regions (51, 61) of the select and conversion transistors having opposite doping to that of the second section of the silicon substrate (11).

12. Photosensitive sensor of claim 11, wherein it comprises:
- a reset transistor (7) whose drain region (71) is connected to the power source, whose source region (70) is connected to the conductor layer (62) of the gate structure of the conversion transistor (6) and to the drain region (81) of the transfer gate (8), said reset transistor comprising a gate structure formed by the dielectric layer and one of the conductor layers, the conductor layer (72) of the gate structure being connected to the power source, the reset transistor being intended for biasing to a known electrical potential the gate structure of the conversion transistor;
- at least an insulated component (2) inserted in a trench manufactured between the sections of the doped silicone substrate (10, 11), in order to electrically isolate the CMOSFET circuit from the CCD shift register.

13. Photosensitive sensor of any of the claims 11-12, in which each CCD shift register of a row is shunt connected to the next one, wherein the insulated component (2) inserted in the doped silicon substrate of each photosensitive cell are configured to electrically isolate the CMOSFET circuit and the transfer gate of photosensitive cells from each other and/or wherein the insulated components (2) of each photosensitive cell are made of an insulating material such as silicon oxide.

14. Method according to any of claims 1-8, performed by operating a photosensitive sensor according to any of claims 9-13, wherein each register element of each cell is selectively biased to a positive or a negative potential in accordance with a sequence generated by a controller, comprising controller (CM), connected to the power source (EG) so as to improve integration and/or transfer from one cell to the at least next one or a combination of integration and/or transfer and wherein a read out is selectively decided by the controller according to a pattern of photosensitive cells to be read out (POCTBRO) used by the controller, wherein the read out voltage according to the pattern of photosensitive cells to be read out (POCTBRO) is then used by the controller and at least a specific algorithm to determine which ones should be used to improve modulation transfer function (MTF) and dynamic range (DR) in time-delayed integration (TDI) mode and/or wherein the read outs are executed according to several different kind of pattern of photosensitive cells to be read out (POCTBRO); and/or wherein the selective biasing includes the following steps:
for at least one photosensitive cell of the sensor, biasing the conductor layers (52 ,72, 82) of the transfer gate, the select transistor and the reset transistor to 0 volts, and biasing each of the conductor layers (41, 42, 43, 44) of the CCD shift register (4) to a known positive electric potential thanks to the power source controlled by the controller, except at least one conductor layer which is biased to a known negative electrical potential, exposing at least the photosensitive cell to incident photons during a predetermined time called integration time ti in order to generate charges in the doped silicon substrate (11), the value of said integration time being stored in a memory region of the controller, biasing the conductor layers (41, 42, 43, 44) of at least one half of register elements of the CCD shift register of at least the photosensitive cell to a known negative electrical potential thanks to the power source controlled by the controller, in order to concentrate charges generated by the CCD shift register in the part of the doped silicone substrate (1) below the conductor layers (41, 42, 43, 44) of the shift register which are still biased to the positive electrical potential, only a register element adjacent to a register element that was negatively biased at first step may be negatively biased in third step;
and/or wherein the read out of a cell includes at least the following steps:
biasing the conductor layer (72) of the reset transistor (7) of the photosensitive cell to a known positive electrical potential called V_{dd} thanks to the power source controlled by the controller, the potential of the of the drain region (61) of the conversion transistor (6) of the photosensitive cell being V_{dd},
once the potential of node A is brought to a positive potential V+, biasing the conductor layer (72) of the reset transistor (7) of at least the photosensitive cell to 0 volts thanks to the power source controlled by the controller,
biasing the conductor layer (82) of the transfer gate (8) of the photosensitive cell to V_{dd} thanks to the power source controlled by the controller, in order to allow flow of charges from the CCD shift register to the conversion transistor,
the potential of the drain region (81) of the transfer gate (8) and the conductor layer (62) of the conversion transistor (6) of the photosensitive cell being brought to V+ - ΔV because of flow of charges, biasing the rest of the conductor layers (41, 42, 43, 44) of the CCD shift register of the photosensitive cell to 0 volts, then biasing the conductor layer (82) of the transfer gate (8) of the photosensitive cell to 0 volts, thanks to the power source controlled by the controller,
biasing the conductor layer (52) of the select transistor (5) of the photosensitive cell to V_{dd} thanks to the power source controlled by the controller, in order to transfer voltage or current from the conversion transistor (6) to the source region (50) of the select transistor (5),
measuring the potential Vₒᵤₜ of the source region (50) of the select transistor (6) of the photosensitive cell, in order to deduce the number of charges generated by the CCD shift register of said cell;
and/or in which, at least two phases are positively biased on the adjacent cell of the one on which transfer should be done, comprising the step of reversing the polarization of the upward positively biased phase and of the downward phase adjacent the second positively biased phase, and iterating said previous step until both positively biased phases are belonging to the selected position in the cell, wherein said method is applied simultaneously to several rows of the photosensitive sensor.

## Patentansprüche

1. Verfahren zum Betreiben eines lichtempfindlichen Sensors zum Erfassen von Bildern einer Szene, wobei der Sensor ein Array von miteinander verbundenen lichtempfindlichen Zellen aufweist, die in einer Anzahl von Spalten (A, B, C) und Zeilen angeordnet sind, wobei jede lichtempfindliche Zelle aufweist:
- ein CCD-Schieberegister (4) mit einer Mehrzahl an Registerelementen, wobei das CCD-Schieberegister so ausgebildet ist, dass es ankommendes Licht in Ladung umwandelt, die Ladung sammelt und die gesammelte Ladung zu einer CMOS-Ausleseschaltung (5) oder zu den Registerelementen einer benachbarten lichtempfindlichen Zelle transportiert;
- eine CMOS-Ausleseschaltung (5), die so konfiguriert ist, dass sie das CCD-Schieberegister (4) ausliest, indem sie die von jedem der Registerelemente des CCD-Registers (4) transportierten Ladungen empfängt und die Ladungen in ein spannungs- oder stromempfindliches Zellensignal umwandelt;
wobei das Verfahren das Betreiben der CCD-Schieberegister und CMOS-Ausleseschaltungen umfasst, um folgende Schritte durchzuführen:
- Umwandeln von Licht und Sammeln von Ladungen in den Schieberegistern einer ersten Spalte (A) von lichtempfindlichen Zellen während eines ersten Integrationszeitintervalls;
- Auslesen der CCD-Schieberegister der ersten Spalte (A) lichtempfindlicher Zellen nach dem ersten Integrationszeitintervall, um ein erstes Signal einer lichtempfindlichen Zelle auf der Grundlage der in dem ersten Integrationszeitintervall gesammelten Ladungen bereitzustellen;
- Umwandeln von Licht und Sammeln von Ladung in den Schieberegistern einer zweiten Spalte (B) von lichtempfindlichen Zellen während eines zweiten Integrationszeitintervalls nach dem ersten Integrationszeitintervall;
- Übertragen der in den Schieberegistern der zweiten Spalte (B) lichtempfindlicher Zellen gesammelten Ladung nach dem zweiten Integrationszeitintervall in Richtung der Schieberegister einer weiteren Spalte (C) lichtempfindlicher Zellen;
- Umwandeln von Licht und Sammeln von Ladung in den Schieberegistern der weiteren Spalte (C) von lichtempfindlichen Zellen während eines weiteren Integrationszeitintervalls;
- Auslesen der CCD-Schieberegister der weiteren Spalte (C) lichtempfindlicher Zellen nach dem weiteren Integrationszeitintervall, um ein weiteres Signal einer lichtempfindlichen Zelle auf der Grundlage der im zweiten und weiteren Integrationszeitintervallen gesammelten Ladungen bereitzustellen.

2. Verfahren nach Anspruch 1, aufweisend die folgenden Schritte:
- Wiederholen des Übertragens von Ladungen auf lichtempfindliche Zellen einer oder mehrerer aufeinanderfolgender weiterer Spalten lichtempfindlicher Zellen während eines oder mehrerer aufeinanderfolgender weiterer Zeitintervalle;
- Auslesen der CCD-Schieberegister (4) der lichtempfindlichen Zellen der letzten Spalte lichtempfindlicher Zellen, um ein weiteres Signal einer lichtempfindlichen Zelle auf der Grundlage der im zweiten Integrationszeitintervall und in dem einen oder den mehreren weiteren Zeitintervallen gesammelten Ladungen bereitzustellen;
und/oder wobei das Verfahren, nachdem das zweite Signal einer lichtempfindlichen Zelle bereitgestellt wurde, folgende Schritte aufweist:
- mehrmaliges Wiederholen des Übertragens der an einer Spalte lichtempfindlicher Zellen gesammelten Ladung zu einer benachbarten Spalte lichtempfindlicher Zellen;
- Auslesen der resultierenden Ladung von CCD-Registern der Zielspalte von lichtempfindlichen Zellen, um mindestens ein weiteres Signal einer lichtempfindlichen Zelle bereitzustellen.

3. Verfahren nach einem der vorherigen Ansprüche, aufweisend die Mittelwertbildung eines ersten Signals einer lichtempfindlichen Zelle, das nach einer ersten Gesamtintegrationszeit bestimmt wurde, und einer Mehrzahl weiterer Signale einer lichtempfindlichen Zelle, die nach jeweiligen weiteren Gesamtintegrationszeiten bestimmt wurden, wobei jede weitere Integrationszeit vorzugsweise länger ist als eine vorhergehende Integrationszeit.

4. Verfahren nach einem der vorherigen Ansprüche, bei dem das Auftreten von Vibrationen während des Sammelns von Ladung erfasst wird und die gesammelte Ladung in Richtung der CMOS-Ausleseschaltung transportiert wird, basierend auf einer Reihe von Signalen lichtempfindlicher Zellen, die im Wesentlichen von den CMOS-Ausleseschaltungen in den jeweiligen Zeilen des lichtempfindlichen Zellenarrays bereitgestellt werden.

5. Verfahren nach einem der vorherigen Ansprüche, aufweisend die Schritte:
- Prüfen der Qualität jedes der ermittelten Signale einer lichtempfindlichen Zelle;
- Entfernen des einen oder der mehreren Ausleseergebnisse, bei denen eine unzureichende Qualität festgestellt wurde.

6. Verfahren nach einem der vorherigen Ansprüche, wobei das Transportieren der Ladung von einer lichtempfindlichen Zelle zu einer benachbarten lichtempfindlichen Zelle das Transportieren der gesamten in allen Registerelementen der lichtempfindlichen Zelle gesammelten Ladung zu der benachbarten lichtempfindlichen Zelle umfasst; und/oder aufweisend das Transportieren einer Ladung eines Registerelements einer lichtempfindlichen Zelle zu einem oder mehreren der anderen Registerelemente derselben lichtempfindlichen Zelle während eines Integrationszeitintervalls, wobei das Übertragen der Ladung von einem Registerelement zu einem anderen Registerelement für jedes Integrationszeitintervall n-mal erfolgt, wobei n die Anzahl der Registerelemente der lichtempfindlichen Zelle ist.

7. Verfahren nach einem der vorherigen Ansprüche, wobei die Transportrichtung der Ladung der Richtung der Relativbewegung zwischen Szene und Sensor entspricht.

8. Verfahren nach einem der vorherigen Ansprüche, wobei das CCD-Schieberegister (4) aufweist:
erste Registerelemente (V1-V4), die so angeordnet sind, dass sie Ladung in Längsrichtung von einer ersten lichtempfindlichen Zelle zu einer zweiten, in einer benachbarten Spalte angeordneten lichtempfindlichen Zelle transportieren können;
zweite Registerelemente (H1-H3), die so angeordnet sind, dass sie Ladung in Querrichtung, senkrecht zur Längsrichtung, von der ersten lichtempfindlichen Zelle zu einer in einer benachbarten Zeile angeordneten lichtempfindlichen Zelle transportieren können;
- eine Anordnung von Mischgattern (M1-M4), die mit einem der ersten Registerelemente und einem der zweiten Registerelemente verbunden sind;
wobei die Mischgatter so ausgebildet sind, dass sie selektiv mit einer Vorspannung versehen werden;
wobei das Verfahren das selektive Versehen der Mischgatter mit einer Vorspannung umfasst, um Ladung durch die Mischgatter selektiv entweder in der Längsrichtung oder in der Querrichtung zu transportieren, wobei das Verfahren ferner das Versehen der Mischgatter und der Registerelemente mit Vorspannung umfasst, um selektiv einen longitudinalen Ladungstransport von den Gattern der ersten Registerelemente der ersten lichtempfindlichen Zelle durch die Mischgatter zu den ersten Registerelementen einer lichtempfindlichen Zelle in einer benachbarten Spalte oder einen transversalen Ladungstransport von den zweiten Registerelementen der ersten lichtempfindlichen Zelle durch die Mischgatter zu den zweiten Registerelementen einer lichtempfindlichen Zelle in einer benachbarten Zeile zu bewirken und/oder aufweisend das Versehen der Mischgatter und der Registerelemente mit Vorspannung, um selektiv einen Ladungstransport von den ersten Registerelementen der ersten lichtempfindlichen Zelle durch die Mischgatter zu den ersten Registerelementen der zweiten lichtempfindlichen Zelle zu bewirken, einen Ladungstransport von den ersten Registerelementen der ersten lichtempfindlichen Zelle durch die Mischgatter zu den ersten Registerelementen einer in einer ersten benachbarten Reihe angeordneten lichtempfindlichen Zelle oder Ladungstransport von den ersten Registerelementen der ersten lichtempfindlichen Zelle durch die Mischgatter und die zweiten Registerelemente der ersten lichtempfindlichen Zelle zu den ersten Registerelementen einer lichtempfindlichen Zelle, die in einer zweiten benachbarten Reihe angeordnet ist, weiter aufweisend das selektive Versehen der Mischgatter und der Registerelemente mit Vorspannung, um zu ermöglichen, dass die von dem Licht einer Szene stammende Ladung der Bewegung der Szene relativ zu dem lichtempfindlichen Sensor folgt, und/oder aufweisend die folgenden Schritte:
- Bestimmen der Geschwindigkeit und Richtung der Bewegung der Szene relativ zum lichtempfindlichen Sensor aus den Signalen einer lichtempfindlichen Zelle, die von lichtempfindlichen Zellen eines ersten Teils des lichtempfindlichen Sensors empfangen werden;
- selektives Versehen der Mischgatter und Registerelemente eines anderen, zweiten Teils des lichtempfindlichen Sensors mit Vorspannung entsprechend der ermittelten Geschwindigkeit und Bewegungsrichtung der Szene.

9. Lichtempfindlicher Sensor zum Erfassen von Bildern einer Szene, wobei der lichtempfindliche Sensor ein Array von miteinander verbundenen lichtempfindlichen Zellen aufweist, die in einer Anzahl von Spalten und Zeilen angeordnet sind, wobei jede lichtempfindliche Zelle aufweist:
- ein CCD-Schieberegister (4) mit einer Mehrzahl an Registerelementen, wobei das CCD-Schieberegister (4) so ausgebildet ist, dass es ankommendes Licht in Ladung umwandelt, diese Ladung sammelt und die gesammelte Ladung zu einer CMOS-Ausleseschaltung (5) oder zu den Registerelementen einer benachbarten lichtempfindlichen Zelle transportiert;
- eine CMOS-Ausleseschaltung (5), die so konfiguriert ist, dass sie das CCD-Schieberegister (4) ausliest, indem sie die von jedem der Registerelemente des CCD-Registers (4) transportierten Ladungen empfängt und die Ladungen in ein Spannungs- oder Stromsignal der lichtempfindlichen Zellen umwandelt;
- eine Steuerung zum Steuern des Betriebs der CCD-Schieberegister (4) und CMOS-Ausleseschaltungen (5) der lichtempfindlichen Zellen, wobei die Steuerung so konfiguriert ist, dass sie das CCD-Schieberegister und die CMOS-Ausleseschaltung zu folgendem veranlasst:
- Umwandeln von Licht und Sammeln von Ladungen in den Schieberegistern einer ersten Spalte (A) von lichtempfindlichen Zellen während eines ersten Integrationszeitintervalls;
- Auslesen der CCD-Schieberegister der ersten Spalte (A) lichtempfindlicher Zellen nach dem ersten Integrationszeitintervall, um ein erstes Signal einer lichtempfindlichen Zelle gemäß der im ersten Integrationszeitintervall gesammelten Ladungen bereitzustellen;
- Umwandeln von Licht und Sammeln von Ladung in den Schieberegistern einer zweiten Spalte (B) von lichtempfindlichen Zellen während eines zweiten Integrationszeitintervalls nach dem ersten Integrationszeitintervall;
- Übertragen der in den Schieberegistern der zweiten Spalte (B) lichtempfindlicher Zellen gesammelten Ladung nach dem zweiten Integrationszeitintervall auf die Schieberegister einer weiteren Spalte (C) lichtempfindlicher Zellen;
- Umwandeln von Licht und Sammeln von Ladung in den Schieberegistern der weiteren Spalte (C) von lichtempfindlichen Zellen während eines weiteren Integrationszeitintervalls;
- Auslesen der CCD-Schieberegister der weiteren Spalte (C) lichtempfindlicher Zellen nach dem weiteren Integrationszeitintervall, um ein weiteres Signal einer lichtempfindlichen Zelle gemäß der im zweiten und weiteren Integrationszeitintervall gesammelten Ladungen bereitzustellen.

10. Lichtempfindlicher Sensor nach Anspruch 9, aufweisend:
- erste Registerelemente (V1-V4), die so angeordnet sind, dass sie Ladung in Längsrichtung von einer ersten lichtempfindlichen Zelle zu einer zweiten in einer benachbarten Spalte angeordneten lichtempfindlichen Zelle transportieren;
- zweite Registerelemente (H1-H3), die so angeordnet sind, dass sie Ladung in Querrichtung, senkrecht zur Längsrichtung, von der ersten lichtempfindlichen Zelle zu einer dritten in einer benachbarten Zeile angeordneten lichtempfindlichen Zelle transportieren; und
- ein Array von Mischgattern (M1-M4), die mit einem der ersten Registerelemente und einem der zweiten Registerelemente verbunden sind, wobei die Steuerung konfiguriert ist, um
- die Mischgatter und Registerelemente selektiv mit einer Vorspannung zu versehen, um selektiv einen longitudinalen Ladungstransport von den Gates der ersten Registerelemente der ersten lichtempfindlichen Zelle durch die Mischgatter zu den ersten Registerelementen einer lichtempfindlichen Zelle in einer benachbarten Spalte oder einen transversalen Ladungstransport von den zweiten Registerelementen der ersten lichtempfindlichen Zelle durch die Mischgatter zu den zweiten Registerelementen einer lichtempfindlichen Zelle in einer benachbarten Zeile zu bewirken; und/oder
- die Mischgatter und Registerelemente selektiv mit einer Vorspannung zu versehen, um selektiv einen Ladungstransport von den ersten Registerelementen der ersten lichtempfindlichen Zelle durch die Mischgatter zu ersten Registerelementen der zweiten lichtempfindlichen Zelle, einen Ladungstransport von den ersten Registerelementen der ersten lichtempfindlichen Zelle durch die Mischgatter zu ersten Registerelementen einer in einer ersten benachbarten Reihe angeordneten lichtempfindlichen Zelle oder einen Ladungstransport von den ersten Registerelementen der ersten lichtempfindlichen Zelle durch Mischgatter und die zweiten Registerelemente der ersten lichtempfindlichen Zelle zu den ersten Registerelementen einer in einer zweiten benachbarten Reihe angeordneten lichtempfindlichen Zelle zu bewirken; und/oder
- das Verfahren nach einem der Ansprüche 1 bis 9 asuzuführen.

11. Lichtempfindlicher Sensor nach Anspruch 9 oder 10, aufweisend eine Mehrzahl lichtempfindlicher Zellen, die ein Array aus N Zeilen und M Spalten bilden, wobei jede lichtempfindliche Zelle mindestens eine auf einem dotierten Siliziumsubstrat liegende dielektrische Schicht (3), die in mindestens zwei elektrisch getrennte Abschnitte (10, 11) unterteilt ist, und eine Mehrzahl elektrisch getrennter, Registerelemente bildender Leiterschichten (41, 42, 43, 44, 52, 62, 72, 82), die jeweils auf der dielektrischen Schicht liegen, aufweist, wobei die mit der dielektrischen Schicht gekoppelten Leiterschichten zur Bildung von zumindest einer der folgenden Gate-Strukturen vorgesehen sind:
ein CCD-Schieberegister (4), wobei jedes Registerelement in Form einer Gate-Struktur ausgebildet ist, deren Leiterschicht (41, 42, 43, 44) selektiv mit einer Stromquelle verbunden ist, so dass Leiterschichten des CCD-Schieberegisters unterschiedlich und selektiv mit einer Vorspannung versehen werden können, um einen Ladungstransfer von einem Registerelement des Registers zu einem benachbarten zuzulassen oder nicht;
eine CMOS-Ausleseschaltung (5), wobei die Signale der lichtempfindlichen Zelle von einer Steuerung, z. B. einem Computer, gelesen werden, die zumindest mit der Stromquelle und der lichtempfindlichen Zelle verbunden ist;
ein Transfer-Gate (8), aufweisend:
einen Drain-Bereich (81), dessen Dotierung derjenigen des zweiten Abschnitts des dotierten Siliziumsubstrats (11) entgegengesetzt ist,
eine Gate-Struktur, die durch die dielektrische Schicht und eine mit der Stromquelle verbundenen Leiterschicht (82) gebildet wird, wobei die Vorspannung der Leiterschicht dieser Gate-Struktur einen Ladungstransfer von dem CCD-Schieberegister zu der CMOS-Ausleseschaltung zulässt oder nicht, wobei:
- die Abschnitte des dotierten Siliziumsubstrats (10, 11) auf einem Kernsubstrat (0) liegen, dessen Dotierung die gleiche ist wie die der Abschnitte des dotierten Siliziumsubstrats (10, 11);
- das CCD-Schieberegister zwischen zwei und zehn Registerelemente, vorzugsweise zwischen 2 und 6 Registerelemente, aufweist;
- das Siliziumsubstrat P-dotiert ist und/oder wobei die Leiterschichten (41, 42, 43, 44, 52, 62, 72, 82) der Gate-Strukturen des CCD-Schieberegisters, einer CMOSFET-Schaltung und des Transfergates aus polykristallinem Silizium bestehen und/oder wobei die dielektrische Schicht (3) aus einem isolierenden Material wie Siliziumoxid besteht; und/oder
- der Sensor eine CMOSFET-Schaltung aufweist, mit
- einem Umwandlungstransistor (6), dessen Drain-Bereich (61) mit der Stromquelle verbunden ist, wobei der Umwandlungstransistor eine Gate-Struktur aufweist, die durch die dielektrische Schicht (3) und eine (62) der Leiterschichten gebildet wird, wobei die Leiterschicht (62) der Gate-Struktur mit dem Drain-Bereich (81) des Transfergates verbunden ist, wobei der Umwandlungstransistor dazu bestimmt ist, Ladungen, die vom CCD-Schieberegister kommen, durch das Transfergate in Spannung oder Strom umzuwandeln;
- einem Auswahltransistor (5), dessen Drain-Bereich (51) an den Source-Bereich (60) des Umwandlungstransistors angrenzt und dessen Source-Bereich (50) mit der Steuerung verbunden ist, wobei der Auswahltransistor eine durch die dielektrische Schicht und eine der Leiterschichten gebildete Gate-Struktur aufweist, wobei die Leiterschicht (52) der Gate-Struktur mit der Stromquelle verbunden ist, wobei die Source-Bereiche (50, 60) und die Drain-Bereiche (51, 61) des Auswahl- und des Umwandlungstransistors eine entgegengesetzte Dotierung zu der des zweiten Abschnitts des Siliziumsubstrats (11) aufweisen.

12. Lichtempfindlicher Sensor nach Anspruch 11, aufweisend:
- einen Reset-Transistor (7), dessen Drain-Bereich (71) mit der Stromquelle verbunden ist, dessen Source-Bereich (70) mit der Leiterschicht (62) der Gate-Struktur des Umwandlungstransistors (6) und mit dem Drain-Bereich (81) des Transfer-Gates (8) verbunden ist, wobei der Reset-Transistor eine Gate-Struktur aufweist, die von der dielektrischen Schicht und einer der Leiterschichten gebildet wird, wobei die Leiterschicht (72) der Gate-Struktur mit der Stromquelle verbunden ist, wobei der Reset-Transistor dazu bestimmt ist, die Gate-Struktur des Umwandlungstransistors auf ein bekanntes elektrisches Potential zu bringen;
- mindestens ein isoliertes Bauteil (2), das in einen zwischen den Abschnitten des dotierten Silikonsubstrats (10, 11) hergestellten Einschnitt eingefügt ist, um die CMOSFET-Schaltung von dem CCD-Schieberegister elektrisch zu isolieren.

13. Lichtempfindlicher Sensor nach einem der Ansprüche 11 bis 12, bei dem jedes CCD-Schieberegister einer Reihe mit dem nächsten parallel verbunden ist, wobei die in das dotierte Siliziumsubstrat jeder lichtempfindlichen Zelle eingefügten isolierten Komponenten (2) so ausgebildet sind, dass sie die CMOSFET-Schaltung und das Transfer-Gate der lichtempfindlichen Zellen voneinander elektrisch isolieren und/oder wobei die isolierten Komponenten (2) jeder lichtempfindlichen Zelle aus einem isolierenden Material wie Siliziumoxid bestehen.

14. Verfahren nach einem der Ansprüche 1 bis 8, welches durch Betreiben eines lichtempfindlichen Sensors nach einem der Ansprüche 9 bis 13 durchgeführt wird, wobei jedes Registerelement jeder Zelle selektiv auf ein positives oder ein negatives Potential vorgespannt wird gemäß einer Sequenz, die von einer Steuerung erzeugt wird, eine Steuerung (CM) aufweisend, die mit der Stromquelle (EG) verbunden ist, um die Integration und/oder die Übertragung von einer Zelle zu der zumindest nächsten oder eine Kombination von Integration und/oder Übertragung zu verbessern, und wobei ein Auslesen durch die Steuerung selektiv entschieden wird, gemäß einem Muster von auszulesenden lichtempfindlichen Zellen (POCTBRO), das von der Steuerung verwendet wird, wobei die Auslesespannung gemäß dem Muster der auszulesenden lichtempfindlichen Zellen (POCTBRO) dann von der Steuerung und mindestens einem spezifischen Algorithmus verwendet wird, um zu bestimmen, welche verwendet werden sollten, um die Modulationsübertragungsfunktion (MTF) und den Dynamikbereich (DR) im zeitverzögerten Integrationsmodus (TDI) zu verbessern, und/oder wobei das Auslesen gemäß mehreren verschiedenen Arten von Mustern von auszulesenden lichtempfindlichen Zellen (POCTBRO) ausgeführt wird; und/oder wobei das selektive Versehen mit einer Vorspannung die folgenden Schritte aufweist:
für mindestens eine lichtempfindliche Zelle des Sensors, Versehen der Leiterschichten (52, 72, 82) des Transfergates, des Auswahltransistors und des Rücksetztransistors mit einer Vorspannung auf 0 Volt und Vorspannen jeder der Leiterschichten (41, 42, 43, 44) des CCD-Schieberegisters (4) auf ein bekanntes positives elektrisches Potential durch die von der Steuerung gesteuerten Stromquelle, mit Ausnahme mindestens einer Leiterschicht, die auf ein bekanntes negatives elektrisches Potential vorgespannt wurde, Aussetzen zumindest der lichtempfindliche Zelle einfallenden Photonen während einer Integrationszeit ti genannten vorgegebenen Zeit, um Ladungen in dem dotierten Siliziumsubstrat (11) zu erzeugen, wobei der Wert der Integrationszeit in einem Speicherbereich der Steuerung gespeichert wird, Vorspannen der Leiterschichten (41, 42, 43, 44) von mindestens einer Hälfte der Registerelemente des CCD-Schieberegisters von zumindest der lichtempfindlichen Zelle auf ein bekanntes negatives elektrisches Potential durch die von der Steuerung gesteuerten Stromquelle, um durch das CCD-Schieberegister erzeugte Ladungen in dem Teil des dotierten Silikonsubstrats (1) unterhalb der Leiterschichten (41, 42, 43, 44) des Schieberegisters, die noch auf das positive elektrische Potential vorgespannt sind, zu konzentrieren, wobei im dritten Schritt nur ein an ein Registerelement angrenzendes Registerelement, welches im ersten Schritt mit einer negativen Vorspannung versehen war, negativ vorgespannt werden darf;
und/oder wobei das Auslesen einer Zelle zumindest die folgenden Schritte aufweist:
Vorspannen der Leiterschicht (72) des Rücksetztransistors (7) der lichtempfindlichen Zelle auf ein bekanntes positives elektrisches Vdd genanntes Potential, durch die von der Steuerung gesteuerten Stromquelle, wobei das Potential des Drain-Bereichs (61) des Umwandlungstransistors (6) der lichtempfindlichen Zelle Vdd beträgt,
sobald das Potential des Knotens A auf ein positives Potential V+ gebracht ist, Vorspannen der Leiterschicht (72) des Reset-Transistors (7) zumindest der lichtempfindlichen Zelle auf 0 Volt durch die von der Steuerung gesteuerten Stromquelle,
Vorspannen der Leiterschicht (82) des Transfergates (8) der lichtempfindlichen Zelle auf Vdd durch die von der Steuerung gesteuerten Stromquelle, um einen Ladungsfluss vom CCD-Schieberegister zum Umwandlungstransistor zu ermöglichen,
wobei das Potential des Drain-Bereichs (81) des Transfer-Gates (8) und der Leiterschicht (62) des Umwandlungstransistors (6) der lichtempfindlichen Zelle aufgrund des Ladungsflusses auf V+ - AV gebracht wird, wobei der Rest der Leiterschichten (41, 42, 43, 44) des CCD-Schieberegisters der lichtempfindlichen Zelle auf 0 Volt vorgespannt wird und dann die Leiterschicht (82) des Transfer-Gates (8) der lichtempfindlichen Zelle durch die von der Steuerung gesteuerten Stromquelle auf 0 Volt vorgespannt wird,
Vorspannen der Leiterschicht (52) des Auswahltransistors (5) der lichtempfindlichen Zelle auf Vdd durch die von der Steuerung gesteuerten Stromquelle, um Spannung oder Strom vom Umwandlungstransistor (6) zum Source-Bereich (50) des Auswahltransistors (5) zu übertragen,
Messen des Potentials Vout des Source-Bereichs (50) des Auswahltransistors (6) der lichtempfindlichen Zelle, um die Anzahl der durch das CCD-Schieberegister der Zelle erzeugten Ladungen abzuleiten;
und/oder bei dem mindestens zwei Phasen auf der benachbarten Zelle derjenigen, auf die das Übertragen erfolgen soll, positiv vorgespannt sind, aufweisend den Schritt des Umkehrens der Polarisation der aufwärtsgerichteten positiv vorgespannten Phase und der der zweiten positiv vorgespannten Phase benachbarten abwärtsgerichteten Phase, sowie des Wiederholens des vorherigen Schritts, bis beide positiv vorgespannten Phasen zu der ausgewählten Position in der Zelle gehören, wobei das Verfahren gleichzeitig auf mehrere Zeilen des lichtempfindlichen Sensors angewendet wird.

## Revendications

1. Procédé de fonctionnement d'un capteur photosensible pour capturer des images d'une scène, le capteur comprenant un réseau de cellules photosensibles interconnectées, agencées dans un certain nombre de colonnes (A, B, C) et de rangées, chaque cellule photosensible comprenant :
- un registre à décalage de dispositif à couplage de charge, CCD, (4) comprenant une pluralité d'éléments de registre, le registre à décalage de CCD étant configuré pour convertir la lumière entrante en charge, collectant la charge et transportant la charge collectée vers un circuit de lecture CMOS (5) ou aux éléments de registre d'une cellule photosensible adjacente ;
- un circuit de lecture CMOS (5) configuré pour lire le registre à décalage de CCD (4) en recevant les charges transportées par chacun des éléments de registre du registre CCD (4) et pour convertir les charges en un signal de cellule photosensible de tension ou de courant ;
le procédé comprenant le fonctionnement des registres à décalage de CCD et des circuits de lecture CMOS pour :
- convertir la lumière et collecter la charge dans les registres à décalage d'une première colonne (A) de cellules photosensibles pendant un premier intervalle de temps d'intégration ;
- lire les registres à décalage de CCD de la première colonne (A) de cellules photosensibles après le premier intervalle de temps d'intégration pour fournir un premier signal de cellule photosensible sur la base des charges collectées dans le premier intervalle de temps d'intégration ;
- convertir la lumière et collecter la charge dans les registres à décalage d'une deuxième colonne (B) de cellules photosensibles pendant un deuxième intervalle de temps d'intégration après le premier intervalle de temps d'intégration ;
- transférer la charge collectée au niveau des registres à décalage de la deuxième colonne (B) de cellules photosensibles après le deuxième intervalle de temps d'intégration vers les registres à décalage d'une colonne (C) supplémentaire de cellules photosensibles ;
- convertir la lumière et collecter la charge dans les registres à décalage de la colonne (C) supplémentaire de cellules photosensibles pendant un intervalle de temps d'intégration supplémentaire ;
- lire les registres à décalage de CCD de la colonne (C) supplémentaire de cellules photosensibles après l'intervalle de temps d'intégration supplémentaire pour fournir un signal de cellule photosensible supplémentaire sur la base des charges collectées dans le deuxième intervalle de temps d'intégration et l'intervalle de temps d'intégration supplémentaire.

2. Procédé selon la revendication 1, comprenant :
- la répétition du transfert de charge aux cellules photosensibles d'une ou plusieurs colonnes supplémentaires successives de cellules photosensibles pendant un ou plusieurs intervalles de temps supplémentaires successifs ;
- la lecture des registres à décalage de CCD (4) des cellules photosensibles de la dernière colonne de cellules photosensibles pour fournir un signal de cellule photosensible supplémentaire sur la base de charges collectées dans le deuxième intervalle de temps d'intégration et les un ou plusieurs intervalles de temps supplémentaires ;
et/ou le procédé comprenant, après avoir fourni le deuxième signal de cellule photosensible :
- la répétition, une pluralité de fois, du transfert de la charge collectée au niveau d'une colonne de cellules photosensibles à une colonne adjacente de cellules photosensibles ;
- la lecture de la charge résultante de registres CCD de la colonne de destination de cellules photosensibles pour fournir au moins un signal de cellule photosensible supplémentaire.

3. Procédé selon l'une quelconque des revendications précédentes, comprenant le moyennage d'un premier signal de cellule photosensible déterminé après un premier temps d'intégration total, et d'une pluralité de signaux de cellule photosensible supplémentaires déterminés après des temps d'intégration totaux supplémentaires respectifs, chaque temps d'intégration supplémentaire étant de préférence plus long qu'un temps d'intégration précédent.

4. Procédé selon l'une quelconque des revendications précédentes, comprenant la détermination de l'occurrence de vibrations pendant la collecte de charge et le transport de la charge collectée vers le circuit de lecture CMOS sur la base d'une série de signaux de cellule photosensible effectivement fournis par les circuits de lecture CMOS dans les rangées respectives du réseau de cellules photosensibles.

5. Procédé selon l'une quelconque des revendications précédentes, comprenant :
- la vérification de la qualité de chacun des signaux de cellule photosensible déterminés ;
- l'élimination des un ou plusieurs résultats de lecture qui ont été déterminés comme ayant une qualité insuffisante.

6. Procédé selon l'une quelconque des revendications précédentes, dans lequel le transport de la charge d'une cellule photosensible à une cellule photosensible adjacente comprend le transport de la charge totale collectée dans tous les éléments de registre de la cellule photosensible à la cellule photosensible adjacente ; et/ou comprenant le transport d'une charge d'un élément de registre d'une cellule photosensible à un ou plusieurs des autres éléments de registre de la même cellule photosensible pendant un intervalle de temps d'intégration, comprenant le transfert de la charge d'un élément de registre à un autre élément de registre n fois pour chaque intervalle de temps d'intégration, dans lequel n est le nombre d'éléments de registre de la cellule photosensible.

7. Procédé selon l'une quelconque des revendications précédentes, dans lequel la direction de transport de charge correspond à la direction d'un mouvement relatif de la scène et du capteur.

8. Procédé selon l'une quelconque des revendications précédentes, dans lequel le registre à décalage de CCD (4) comprend :
des premiers éléments de registre (VI à V4) agencés pour transporter une charge, dans une direction longitudinale, d'une première cellule photosensible à une deuxième cellule photosensible agencée dans une colonne adjacente ;
des deuxièmes éléments de registre (H1 à H3) agencés pour transporter une charge, dans une direction transversale perpendiculaire à la direction longitudinale, de la première cellule photosensible à une cellule photosensible agencée dans une rangée adjacente ;
- un réseau de portes de mélange (M1 à M4) connectées à l'un des premiers éléments de registre et à l'un des deuxièmes éléments de registre ;
dans lequel les portes de mélange sont configurées pour être polarisées de manière sélective ;
le procédé comprenant la polarisation sélective des portes de mélange pour transporter une charge à travers les portes de mélange sélectivement dans l'une ou l'autre de la direction longitudinale ou de la direction transversale, comprenant en outre la polarisation des portes de mélange et des éléments de registre pour provoquer sélectivement un transport de charge longitudinal des portes de premiers éléments de registre de la première cellule photosensible, à travers les portes de mélange, à des premiers éléments de registre d'une cellule photosensible dans une colonne adjacente, ou un transport de charge transversal des deuxièmes éléments de registre de la première cellule photosensible, à travers les portes de mélange, aux deuxièmes éléments de registre d'une cellule photosensible dans une rangée adjacente, et/ou comprenant la polarisation des portes de mélange et des éléments de registre pour provoquer sélectivement un transport de charge des premiers éléments de registre de la première cellule photosensible, à travers les portes de mélange, à des premiers éléments de registre de la deuxième cellule photosensible, un transport de charge des premiers éléments de registre de la première cellule photosensible, à travers les portes de mélange, à des premiers éléments de registre d'une cellule photosensible agencée dans une première rangée adjacente, ou un transport de charge des premiers éléments de registre de la première cellule photosensible, à travers les portes de mélange et les deuxièmes éléments de registre de la première cellule photosensible, aux premiers éléments de registre d'une cellule photosensible agencée dans une deuxième rangée adjacente, comprenant la polarisation sélective des portes de mélange et des éléments de registre pour permettre à la charge provenant de la lumière d'une scène de suivre le mouvement de la scène par rapport au capteur photosensible et/ou comprenant :
- la détermination de la vitesse et de la direction du mouvement de la scène par rapport au capteur photosensible à partir des signaux de cellule photosensible reçus à partir des cellules photosensibles d'une première partie du capteur photosensible ;
- la polarisation sélective des portes de mélange et des éléments de registre d'une deuxième partie différente du capteur photosensible, sur la base de la vitesse et de la direction déterminées du mouvement de la scène.

9. Capteur photosensible pour capturer des images d'une scène, le capteur photosensible comprenant un réseau de cellules photosensibles interconnectées agencées dans un certain nombre de colonnes et de rangées, chaque cellule photosensible comprenant :
- un registre à décalage de CCD (4) comprenant une pluralité d'éléments de registre, le registre à décalage de CCD (4) étant configuré pour convertir la lumière entrante en charge, collectant la charge et transportant la charge collectée vers un circuit de lecture CMOS (5) ou aux éléments de registre d'une cellule photosensible adjacente ;
- un circuit de lecture CMOS (5) configuré pour lire le registre à décalage de CCD (4) en recevant les charges transportées par chacun des éléments de registre du registre CCD (4) et pour convertir les charges en un signal de cellule photosensible de tension ou de courant ;
- un dispositif de commande pour commander le fonctionnement des registres à décalage de CCD (4) et des circuits de lecture CMOS (5) des cellules photosensibles, dans lequel le dispositif de commande est configuré pour amener le registre à décalage de CCD et le circuit de lecture CMOS à :
- convertir la lumière et collecter la charge dans les registres à décalage d'une première colonne (A) de cellules photosensibles pendant un premier intervalle de temps d'intégration ;
- lire les registres à décalage de CCD de la première colonne (A) de cellules photosensibles après le premier intervalle de temps d'intégration pour fournir un premier signal de cellule photosensible sur la base des charges collectées dans le premier intervalle de temps d'intégration ;
- convertir la lumière et collecter la charge dans les registres à décalage d'une deuxième colonne (B) de cellules photosensibles pendant un deuxième intervalle de temps d'intégration après le premier intervalle de temps d'intégration ;
- transférer la charge collectée au niveau des registres à décalage de la deuxième colonne (B) de cellules photosensibles après le deuxième intervalle de temps d'intégration vers les registres à décalage d'une colonne (C) supplémentaire de cellules photosensibles ;
- convertir la lumière et collecter la charge dans les registres à décalage de la colonne (C) supplémentaire de cellules photosensibles pendant un intervalle de temps d'intégration supplémentaire ;
- lire les registres à décalage de CCD de la colonne (C) supplémentaire de cellules photosensibles après l'intervalle de temps d'intégration supplémentaire pour fournir un signal de cellule photosensible supplémentaire sur la base des charges collectées dans le deuxième intervalle de temps d'intégration et l'intervalle de temps d'intégration supplémentaire.

10. Capteur photosensible selon la revendication 9, comprenant :
- des premiers éléments de registre (V1 à V4) agencés pour transporter une charge, dans la direction longitudinale, d'une première cellule photosensible à une deuxième cellule photosensible agencée dans une colonne adjacente ;
- des deuxièmes éléments de registre (H1 à H3) agencés pour transporter une charge, dans une direction transversale perpendiculaire à la direction longitudinale, de la première cellule photosensible à une troisième cellule photosensible agencée dans une rangée adjacente ; et
- un réseau de portes de mélange (M1 à M4) connectées à l'un des premiers éléments de registre et à l'un des deuxièmes éléments de registre, dans lequel le dispositif de commande est configuré pour
- polariser sélectivement les portes de mélange et les éléments de registre pour provoquer sélectivement un transport de charge longitudinal des portes de premiers éléments de registre de la première cellule photosensible, à travers les portes de mélange, à des premiers éléments de registre d'une cellule photosensible dans une colonne adjacente, ou un transport de charge transversal des deuxièmes éléments de registre de la première cellule photosensible, à travers les portes de mélange, aux deuxièmes éléments de registre d'une cellule photosensible dans une rangée adjacente ; et/ou
- polariser sélectivement les portes de mélange et les éléments de registre pour provoquer sélectivement un transport de charge des premiers éléments de registre de la première cellule photosensible, à travers les portes de mélange, à des premiers éléments de registre de la deuxième cellule photosensible, un transport de charge des premiers éléments de registre de la première cellule photosensible, à travers les portes de mélange, à des premiers éléments de registre d'une cellule photosensible agencée dans une première rangée adjacente, ou un transport de charge des premiers éléments de registre de la première cellule photosensible, à travers les portes de mélange et les deuxièmes éléments de registre de la première cellule photosensible, aux premiers éléments de registre d'une cellule photosensible agencée dans une deuxième rangée adjacente ; et/ou
- mettre en œuvre le procédé selon l'une quelconque des revendications 1 à 9.

11. Capteur photosensible selon la revendication 9 ou 10, comprenant une pluralité de cellules photosensibles formant un réseau de N rangées et de M colonnes, dans lequel chaque cellule photosensible comprend au moins une couche diélectrique (3) reposant sur un substrat de silicium dopé divisée en au moins deux sections (10, 11) séparées électriquement, une pluralité de couches conductrices (41, 42, 43, 44, 52, 62, 72, 82) séparées électriquement formant des éléments de registre, chacune reposant sur la couche diélectrique, dans lequel les couches conductrices couplées à la couche diélectrique sont destinées à former des structures de porte d'au moins :
un registre à décalage de CCD (4), dans lequel chaque élément de registre est formé par une structure de porte dont la couche conductrice (41, 42, 43, 44) est connectée sélectivement à une source de puissance, de sorte que des couches conductrices du registre à décalage de CCD puissent être polarisées différemment et sélectivement afin de permettre ou non un transfert de charges, d'un élément de registre du registre à un élément adjacent ;
un circuit de lecture CMOS (5), les signaux de cellule photosensible étant lus par un dispositif de commande, par exemple des moyens informatiques, qui est au moins connecté à la source de puissance et à la cellule photosensible ;
une porte de transfert (8) comprenant :
une région de drain (81) dont le dopage est opposé à celui de la deuxième section du substrat de silicium dopé (11),
une structure de porte formée par la couche diélectrique et une couche conductrice (82) connectée à la source de puissance, la polarisation de la couche conductrice de ladite structure de porte permettant ou non un transfert de charges du registre à décalage de CCD au circuit de lecture CMOS, dans lequel :
- les sections du substrat de silicium dopé (10, 11) reposent sur un substrat central (0) dont le dopage est le même que celui des sections du substrat de silicium dopé (10, 11) ;
- le registre à décalage de CCD comprend entre deux et dix éléments de registre, de préférence entre 2 et 6 éléments de registre ;
- le substrat de silicium est dopé P et/ou dans lequel les couches conductrices (41, 42, 43, 44, 52, 62, 72, 82) des structures de porte du registre à décalage de CCD, d'un circuit CMOSFET et de la porte de transfert sont réalisées en silicium polycristallin, et/ou dans lequel la couche diélectrique (3) est réalisée en un matériau isolant tel que l'oxyde de silicium ; et/ou
- le capteur comporte un circuit CMOSFET comprenant :
- un transistor de conversion (6) dont la région de drain (61) est connectée à la source de puissance, ledit transistor de conversion comprenant une structure de porte formée par la couche diélectrique (3) et une (62) des couches conductrices, la couche conductrice (62) de la structure de porte étant connectée à la région de drain (81) de la porte de transfert, le transistor de conversion étant destiné à convertir des charges provenant du registre à décalage de CCD à travers la porte de transfert en tension ou en courant ;
- un transistor de sélection (5) dont la région de drain (51) est adjacente à la région de source (60) du transistor de conversion, et dont la région de source (50) est connectée au dispositif de commande, ledit transistor de sélection comprenant une structure de porte formée par la couche diélectrique et une des couches conductrices, la couche conductrice (52) de la structure de porte étant connectée à la source de puissance, les régions de source (50, 60) et les régions de drain (51, 61) des transistors de sélection et de conversion ayant un dopage opposé à celui de la deuxième section du substrat de silicium (11).

12. Capteur photosensible selon la revendication 11, dans lequel il comprend :
- un transistor de réinitialisation (7) dont la région de drain (71) est connectée à la source de puissance, dont la région de source (70) est connectée à la couche conductrice (62) de la structure de porte du transistor de conversion (6) et à la région de drain (81) de la porte de transfert (8), ledit transistor de réinitialisation comprenant une structure de porte formée par la couche diélectrique et une des couches conductrices, la couche conductrice (72) de la structure de porte étant connectée à la source de puissance, le transistor de réinitialisation étant destiné à polariser la structure de porte du transistor de conversion à un potentiel électrique connu ;
- au moins un composant isolé (2) inséré dans une tranchée fabriquée entre les sections du substrat de silicone dopé (10, 11), afin d'isoler électriquement le circuit CMOSFET du registre à décalage de CCD.

13. Capteur photosensible selon l'une quelconque des revendications 11 et 12, dans lequel chaque registre à décalage de CCD d'une rangée est connecté par shunt au suivant, dans lequel le composant isolé (2) inséré dans le substrat de silicium dopé de chaque cellule photosensible est configuré pour isoler électriquement le circuit CMOSFET et la porte de transfert de cellules photosensibles l'un de l'autre, et/ou dans lequel les composants isolés (2) de chaque cellule photosensible sont réalisés en un matériau isolant tel que l'oxyde de silicium.

14. Procédé selon l'une quelconque des revendications 1 à 8, effectué par le fonctionnement d'un capteur photosensible selon l'une quelconque des revendications 9 à 13, dans lequel chaque élément de registre de chaque cellule est sélectivement polarisé à un potentiel positif ou à un potentiel négatif suivant une séquence générée par un dispositif de commande, comprenant un dispositif de commande (CM) connecté à la source de puissance (EG), de sorte à améliorer l'intégration et/ou le transfert d'une cellule au moins à la cellule suivante, ou une commination de l'intégration et/ou du transfert, et dans lequel une lecture est sélectivement décidée par le dispositif de commande selon un motif de cellules photosensibles à lire (POCTBRO) utilisé par le dispositif de commande, dans lequel la tension lue selon le motif de cellules photosensibles à lire (POCTBRO) est ensuite utilisée par le dispositif de commande et au moins un algorithme spécifique pour déterminer lequel doit être utilisé pour améliorer une fonction de transfert de modulation (MTF) et une plage dynamique (DR) dans un mode d'intégration différée (TDI), et/ou dans lequel les lectures sont exécutées selon plusieurs types différents de motifs de cellules photosensibles à lire (POCTBRO) ; et/ou dans lequel la polarisation sélective comporte les étapes suivantes :
pour au moins une cellule photosensible du capteur, polariser les couches conductrices (52 ,72, 82) de la porte de transfert, du transistor de sélection et du transistor de réinitialisation à 0 volt, et polariser chacune des couches conductrices (41, 42, 43, 44) du registre à décalage de CCD (4) à un potentiel électrique positif connu grâce à la source de puissance commandée par le dispositif de commande, à l'exception d'au moins une couche conductrice qui est polarisée à un potentiel électrique négatif connu, exposer au moins la cellule photosensible à des photons incidents pendant un temps prédéterminé appelé temps d'intégration ti afin de générer des charges dans le substrat de silicium dopé (11), la valeur dudit temps d'intégration étant stockée dans une région de mémoire du dispositif de commande, polariser les couches conductrices (41, 42, 43, 44) d'au moins une moitié des éléments de registre du registre à décalage de CCD d'au moins la cellule photosensible à un potentiel électrique négatif connu grâce à la source de puissance commandée par le dispositif de commande, afin de concentrer des charges générées par le registre à décalage de CCD dans la partie du substrat de silicone dopé (1) au-dessous des couches conductrices (41, 42, 43, 44) du registre à décalage qui sont encore polarisées au potentiel électrique positif, seul un élément de registre adjacent à un élément de registre qui était polarisé négativement à la première étape pouvant être polarisé négativement à la troisième étape ;
et/ou dans lequel la lecture d'une cellule comporte au moins les étapes suivantes :
polariser la couche conductrice (72) du transistor de réinitialisation (7) de la cellule photosensible à un potentiel électrique positif connu appelé V_{dd} grâce à la source de puissance commandée par le dispositif de commande, le potentiel de la région de drain (61) du transistor de conversion (6) de la cellule photosensible étant V_{dd},
une fois que le potentiel de nœud A est porté à un potentiel positif V+, polariser la couche conductrice (72) du transistor de réinitialisation (7) d'au moins la cellule photosensible à 0 volt grâce à la source de puissance commandée par le dispositif de commande,
polariser la couche conductrice (82) de la porte de transfert (8) de la cellule photosensible à V_{dd} grâce à la source de puissance commandée par le dispositif de commande, afin de permettre un flux de charges du registre à décalage de CCD au transistor de conversion, le potentiel de la région de drain (81) de la porte de transfert (8) et de la couche conductrice (62) du transistor de conversion (6) de la cellule photosensible étant porté à V+ - ΔV du fait du flux de charges, polariser le reste des couches conductrices (41, 42, 43, 44) du registre à décalage de CCD de la cellule photosensible à 0 volt, polariser ensuite la couche conductrice (82) de la porte de transfert (8) de la cellule photosensible à 0 volt, grâce à la source de puissance commandée par le dispositif de commande,
polariser la couche conductrice (52) du transistor de sélection (5) de la cellule photosensible à V_{dd} grâce à la source de puissance commandée par le dispositif de commande, afin de transférer une tension ou un courant du transistor de conversion (6) à la région de source (50) du transistor de sélection (5),
mesurer le potentiel Vₒᵤₜ de la région de source (50) du transistor de sélection (6) de la cellule photosensible, afin de déduire le nombre de charges générées par le registre à décalage de CCD de ladite cellule ;
et/ou dans lequel, au moins deux phases sont positivement polarisées sur la cellule adjacente à celle sur laquelle le transfert doit être effectué, comprenant l'étape d'inversion de la polarisation de la phase ascendante positivement polarisée et de la phase descendante adjacente à la deuxième phase positivement polarisée, et d'itération de ladite étape précédente jusqu'à ce que les deux phases positivement polarisées appartiennent à la position sélectionnée dans la cellule, dans lequel ledit procédé est appliqué simultanément à plusieurs rangées du capteur photosensible.
